# EUROPEAN PATENT APPLICATION

(11) **EP 4 685 725 A1**
(43) Date of publication of application: **28.01.2026**
(21) Application number: 24774637.3
(22) Date of filing: 04.03.2024
(51) Int. Cl.: G06Q 30/0251, G06Q 30/0242

(54) **INFORMATION PROCESSING DEVICE, INFORMATION PROCESSING METHOD, AND INFORMATION PROCESSING PROGRAM**

(30) Priority: 23.03.2023 JP 2023047150
(71) Applicant: Sony Semiconductor Solutions Corporation, Atsugi-shi, Kanagawa 243-0014 (JP)
(72) Inventor: URABE, Shuichi, Atsugi-shi, Kanagawa 243-0014 (JP); KUWABARA, Akito, Atsugi-shi, Kanagawa 243-0014 (JP)
(74) Representative: MFG Patentanwälte Meyer-Wildhagen Meggle-Freund Gerhard PartG mbB
(86) International application number: PCT/JP2024/007966
(87) International publication number: WO 2024/195492

(57) **Abstract**

An information processing device according to an aspect of the present disclosure includes an acquisition unit that acquires behavior information of a customer in a predetermined space, and a generation unit that generates optimized content, which is content newly generated for a user to be estimated, from behavior information of the user by using a model that has learned a relevance between the behavior information and an advertising effect of content presented in the space.

## Description

### Field

The present disclosure relates to an information processing device, an information processing method, and an information processing program.

### Background

Techniques for analyzing customer behavior in stores and the like to improve sales and service quality are used.

For example, there is known a system that analyzes a traffic line along which a customer moves, predicts a position where the customer acts next, and recommends a product related to the position (for example, Patent Literature 1). Alternatively, there is known a technique of switching content to be displayed on signage (electronic advertisement) in consideration of behavior until a customer comes in front of the signage (for example, Patent Literature 2).

### Citation List

### Patent Literature

Patent Literature 1: JP 2014-232362 A
Patent Literature 2: JP 2021-176061 A

### Summary

### Technical Problem

However, the above-described conventional technologies merely predict the next behavior of the customer or display an advertisement in accordance with the behavior.

That is, in the prior art, it is difficult to obtain more in-depth information that leads to measures for purchase promotion, such as what kind of impression a customer has on a product or a service of a store. For example, in the related art, it is difficult to accurately grasp an intention of a customer and accurately display content desired by the customer.

Therefore, the present disclosure proposes an information processing device, an information processing method, and an information processing program capable of generating content by accurately estimating a behavior and a mental state of a user. Solution to Problem

In order to solve the above problems, an information processing device according to an aspect of the present disclosure includes an acquisition unit that acquires behavior information of a customer in a predetermined space, and a generation unit that generates optimized content, which is content newly generated for a user to be estimated, from behavior information of the user by using a model that has learned a relevance between the behavior information and an advertising effect of content presented in the space.

### Brief Description of Drawings

FIG. 1 is a diagram (1) illustrating an outline of information processing according to an embodiment.
FIG. 2 is a diagram (2) illustrating an outline of information processing according to the embodiment.
FIG. 3 is a diagram (3) illustrating an outline of information processing according to the embodiment.
FIG. 4 is a diagram illustrating a configuration example of an information processing system and an information processing device according to an embodiment.
FIG. 5 is a diagram illustrating an outline of processing executed by a state estimation system.
FIG. 6 is a diagram illustrating an example of learning data used by the state estimation system.
FIG. 7 is a flowchart (1) illustrating a learning processing procedure by the state estimation system.
FIG. 8 is a flowchart (2) illustrating a learning processing procedure by the state estimation system.
FIG. 9 is a flowchart (3) illustrating a learning processing procedure by the state estimation system.
FIG. 10 is a flowchart (1) illustrating an estimation processing procedure by the state estimation system.
FIG. 11 is a flowchart (2) illustrating an estimation processing procedure by the state estimation system.
FIG. 12 is a flowchart (3) illustrating an estimation processing procedure by the state estimation system.
FIG. 13 is a flowchart (4) illustrating an estimation processing procedure by the state estimation system.
FIG. 14 is a diagram (1) illustrating an example of processing using an estimation result by the state estimation system.
FIG. 15 is a diagram (2) illustrating an example of processing using an estimation result by the state estimation system.
FIG. 16 is a diagram illustrating an outline of learning processing by the state estimation system.
FIG. 17 is a diagram illustrating an outline of behavior detection by a behavior detection unit.
FIG. 18 is a diagram illustrating an example of learning data used by a purchase probability estimation system.
FIG. 19 is a diagram (1) illustrating a behavior example detected by the purchase probability estimation system.
FIG. 20 is a diagram (2) illustrating a behavior example detected by the purchase probability estimation system.
FIG. 21 is a diagram (1) illustrating an example of behavior information used by the purchase probability estimation system.
FIG. 22 is a flowchart (1) illustrating a learning processing procedure by the purchase probability estimation system.
FIG. 23 is a diagram (2) illustrating an example of behavior information used by the purchase probability estimation system.
FIG. 24 is a flowchart (2) illustrating a learning processing procedure by the purchase probability estimation system.
FIG. 25 is a diagram (3) illustrating an example of behavior information used by the purchase probability estimation system.
FIG. 26 is a flowchart (3) illustrating a learning processing procedure by the purchase probability estimation system.
FIG. 27 is a flowchart (1) illustrating an estimation processing procedure by the purchase probability estimation system.
FIG. 28 is a flowchart (2) illustrating an estimation processing procedure by the purchase probability estimation system.
FIG. 29 is a flowchart (3) illustrating an estimation processing procedure by the purchase probability estimation system.
FIG. 30 is a diagram illustrating an outline of learning processing executed by a content generation system.
FIG. 31 is a diagram illustrating an outline of generation processing executed by the content generation system.
FIG. 32 is a flowchart illustrating a learning processing procedure by the content generation system.
FIG. 33 is a diagram illustrating an example of model generation processing by the content generation system.
FIG. 34 is a flowchart illustrating a content generation processing procedure by the content generation system.
FIG. 35 is a flowchart illustrating a relearning processing procedure by the content generation system.
FIG. 36 is a flowchart illustrating a second content generation processing procedure by the content generation system.
FIG. 37 is a diagram illustrating an example of content optimized on the basis of a user's line of sight.
FIG. 38 is a diagram illustrating an example of content optimized on the basis of a traffic line of a user.
FIG. 39 is a hardware configuration diagram illustrating an example of a computer that implements functions of an information processing device.

### Description of Embodiments

Hereinafter, embodiments will be described in detail with reference to the drawings. In the following embodiments, the same parts are denoted by the same reference numerals, and redundant description will be omitted.

The present disclosure will be described according to the following order of items.
1. Embodiments
   1-1. Overview of Information Processing according to Embodiment
   1-2. Configuration of Information Processing Device according to Embodiment
   1-3. Information Processing By State Estimation System
   1-4. Information Processing By Purchase Probability Estimation System
   1-5. Information Processing By Content Generation System
2. Other Embodiments
3. Effects of Information Processing Device according to Present Disclosure
4. Hardware Configuration

### (1. Embodiment)

### (1-1. Overview of Information Processing According to Embodiment)

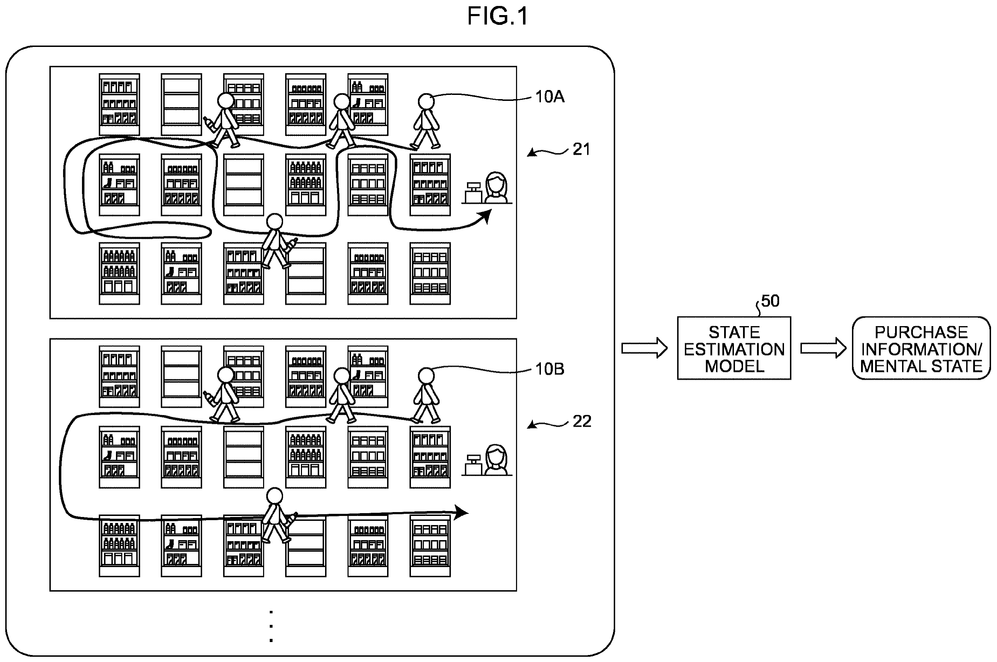

First, an outline of information processing according to an embodiment of the present disclosure will be described with reference to FIGS. 1 to 3. FIG. 1 is a diagram (1) illustrating an outline of information processing according to an embodiment. The example illustrated in FIG. 1 illustrates an example in which an information processing device 100 (not illustrated) executes processing of estimating a behavior or a mental state of a user in a store. Note that, in the following example, for distinction, a person to be estimated for a behavior, a mental state, or the like is referred to as a "user", and a person used as learning data for generating a learning model for performing estimation processing or the like is referred to as a "customer". In addition, hereinafter, a set of data handled by the information processing device 100 is referred to as "information", and each piece of data is referred to as "data", but the distinction therebetween is not strict, and a certain single piece of data may be referred to as "information".

The information processing device 100 is a device that executes information processing according to the present disclosure, and is, for example, an information processing terminal such as a server device or a personal computer (PC).

In the example illustrated in FIG. 1, the information processing device 100 acquires traffic line information of a customer 10A and a customer 10B who have visited the store. Traffic line information 21 illustrated in FIG. 1 indicates a traffic line from when customer 10A enters a store, passes through a cash register, and leaves the store. Similarly, traffic line information 22 illustrated in FIG. 1 indicates a traffic line from when the customer 10B enters a store, passes through a cash register counter for payment, and leaves the store.

For example, the information processing device 100 acquires the traffic line information 21 and the traffic line information 22 on the basis of an overhead image and an overhead moving image acquired by an imaging device (camera) installed on the ceiling of the store. Specifically, the information processing device 100 specifies a customer included in an overhead image or an overhead moving image by image recognition, gives identification information (ID) to the recognized customer, and tracks a series of movements of the specified customer, thereby generating traffic line information.

Note that the information processing device 100 may acquire traffic line information from information obtained by plotting position information acquired from terminal devices possessed by the customer 10A and the customer 10B, or plotting position information of a customer captured by a sensor device installed on a product shelf or the like in a store. That is, the information processing device 100 can acquire traffic line information by an arbitrary means.

Note that the traffic line information does not necessarily include all routes from entrance to the store to exit from the store, and the information processing device 100 may handle, as the traffic line information, a route of a predetermined ratio (for example, 50% or 80%) among routes from entrance to the store to exit from the customer.

The information processing device 100 acquires the traffic line information 21 and the traffic line information 22, and acquires behavior results in stores of the customer 10A and the customer 10B. For example, the information processing device 100 acquires a purchase history such as whether the customer 10A or the customer 10B has dropped by a settlement place (cash register) of a store, has actually purchased a product or a service, what kind of product or the like has been purchased, and how much the purchase amount is. Specifically, the information processing device 100 acquires point of sale (POS) data at the time of passing through a cash register for each customer to which an ID is assigned, and acquires a purchase history of the customer from the POS data. Note that, in a case where the customer has left the store without stopping by the cash register, the information processing device 100 acquires a history that the customer has not performed the purchase behavior. Furthermore, the information processing device 100 may acquire a stay time or the like in the store of the customer.

Furthermore, the information processing device 100 may acquire not only data such as a purchase history but also data indicating a mental state of the customer as a behavior result in the store. For example, the information processing device 100 acquires data indicating a mental state such as whether a customer who has looked around a store is satisfied with a service such as customer service in the store, has a desire of purchase to a product, is satisfied with a product assortment of the product, or the layout of the store is appropriate. Specifically, the information processing device 100 acquires data indicating the mental state of the customer by a customer questionnaire or the like at the time of leaving the store or making a payment.

Furthermore, the information processing device 100 may acquire not only data such as a purchase history but also data indicating an attribute of a customer as a behavior result in a store. For example, the information processing device 100 acquires attributes such as the age and gender of the customer and the presence or absence of a companion by image recognition. Alternatively, the information processing device 100 may acquire the attribute of the customer by performing a customer questionnaire and accepting a report of the age, gender, or the like of the customer.

Then, the information processing device 100 generates a state estimation model 50 that is a model in which the relevance between the traffic line information and the behavior result in the store of the customer is learned. For example, the information processing device 100 generates the state estimation model 50 by a predetermined machine learning method using traffic line information and a purchase history and a mental state as a learning set. That is, the state estimation model 50 is a model in which traffic line information of the user to be estimated is received as an input and the purchase possibility of the user, the mental state of the user, the attribute of the user, and the like are output.

In this manner, the information processing device 100 acquires traffic line information of the user and inputs the acquired traffic line information to the state estimation model 50, thereby estimating at least one of a behavior, an attribute, or a mind of the user located in the store. Specifically, the information processing device 100 estimates, from traffic line information while the user is in a store, information such as how likely the user is to purchase a product, how satisfied the user is with the store, and what attribute the user has.

As a result, the information processing device 100 can estimate the purchase behavior of the user, the degree of satisfaction with the store, and the like, and thus, for example, in a case where it is estimated that the user does not grasp the product position, it is possible to provide a useful service such as actively serving a customer to the user. Furthermore, the information processing device 100 can perform appropriate retail measures such as analysis of a future customer service system and layout of the store by grasping the mental state of the user.

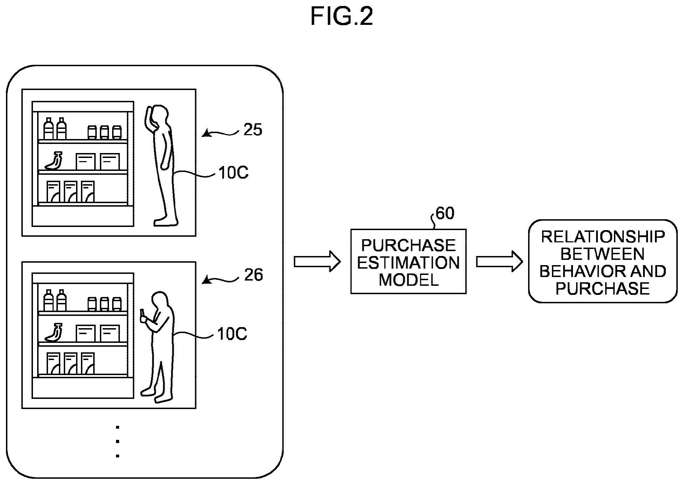

Furthermore, the information processing device 100 may analyze the behavior of the customer who looks at the product and estimate what behavior leads to purchase in more detail. This point will be described with reference to FIG. 2. FIG. 2 is a diagram (2) illustrating an outline of information processing according to the embodiment.

In the example of FIG. 2, as in FIG. 1, a situation is illustrated in which a behavior of a customer 10C is captured and image recognition is performed by a camera installed in the store.

Specifically, the information processing device 100 detects each behavior of the customer in front of the product by image recognition. Note that detection of a behavior is achieved by using a known image recognition technology. For example, in a case where a behavior of gazing at a specific product is detected, the information processing device 100 acquires behavior information 25 including information on the behavior and a product that the customer has paid attention to. Furthermore, in a case where the information processing device detects a behavior such as a customer looking at a smartphone or the like without paying attention to a product, the information processing device 100 acquires behavior information 26 indicating the behavior.

Subsequently, similarly to the example of FIG. 1, the information processing device 100 acquires POS data corresponding to the customer 10C, and acquires a purchase history of the customer 10C. Alternatively, the information processing device 100 acquires a behavior result indicating that the customer 10C has left the store without purchasing anything on the basis of the traffic line information.

Then, the information processing device 100 generates a purchase estimation model 60 in which the relevance between the behavior of the customer 10C in front of the product and the purchase result of the customer 10C is learned. That is, the purchase estimation model 60 is a model in which behavior information of the user in front of the product is received as an input, and outputs estimation results of various purchase behaviors such as whether the user purchases the product, what product the user purchases, and how much money the user pays.

By using the purchase estimation model 60, the information processing device 100 can estimate the user's behavior in a more diversified manner. For example, the information processing device 100 can estimate how a series of behaviors, which are seemingly unrelated to purchase of a product, such as a user who is located in front of a product shelf looking at a price label or an advertisement on the shelf (first behavior) and then turning his/her gaze to a smartphone in his/her hand (second behavior) affects the purchase.

For example, by using the information processing device 100, the store manager can analyze how the behavior of the user viewing the screen of the smartphone affects the purchase result and whether the cause is something that can be searched by the smartphone. As a result, the store manager can consider measures leading to purchase from more various viewpoints.

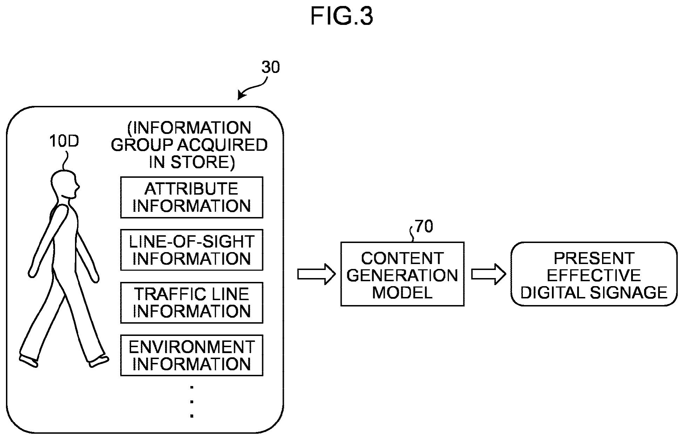

Furthermore, the information processing device 100 may generate content (electronic advertisement or the like) estimated to have a higher advertising effect on the basis of the behavior of the customer. This point will be described with reference to FIG. 3. FIG. 3 is a diagram (3) illustrating an outline of information processing according to the embodiment.

The example of FIG. 3 illustrates a situation in which the behavior information of a customer 10D is acquired by a sensor such as a camera installed in the store as in FIGS. 1 and 2. At this time, the information processing device 100 may acquire the information regarding the customer 10D using not only the camera but also any sensor such as a sensor that measures temperature and humidity. Furthermore, the information processing device 100 may acquire information not only from a sensor but also from an external server or the like that provides weather or the like.

For example, the information processing device 100 acquires, as an information group 30 regarding the customer 10D, attribute information (gender, age, or the like), line-of-sight information (which product or information is being viewed), traffic line information, and environment information (the weather, temperature, or the like on the day) of the customer 10D.

Further, similarly to FIGS. 1 and 2, the information processing device 100 acquires result information such as a purchase history of the customer 10D.

Then, the information processing device 100 generates a content generation model 70, which is a model in which the relevance between the information group related to the customer 10D and the advertising effect of the content presented in the store is learned. For example, the information processing device 100 generates a model in which the customer 10D purchases a product after viewing the content, or a relationship between a point of interest (price, product image, other information, etc.) in the content by the customer 10D and a purchase result is learned.

Thereafter, in a case of acquiring the information group of the target user, the information processing device 100 generates effective content (hereinafter, referred to as "optimized content") and presents the content as digital signage to the user. For example, in a case of acquiring an information group such as a traffic line and an attribute of a user who has entered the store, the information processing device 100 generates optimized content for the user and displays the optimized content on a display device (such as a signage display) installed in the store. As a result, the information processing device 100 can present the content estimated to be most effective to the user in real time, and thus, can promote the desire of purchase of the user.

In this case, the information processing device 100 can further correct the optimized content on the basis of the user's line-of-sight information or the like for the presented optimized content. For example, in a case of acquiring line-of-sight information indicating that the user pays attention to "price information" in the content, the information processing device 100 may further perform generation processing of changing the price information to a conspicuous color or enlarging characters.

As described above, the information processing device 100 does not simply switch the digital signage or the like of the product whose purchase is to be promoted from the predetermined design, but can present more effective signage for each user according to the characteristic (attributes, traffic lines, line of sight, and the like) or situation (weather, temperature, or the like) of the user. Furthermore, by tracking the purchase history of the user after viewing the optimized content, the information processing device 100 can also obtain detailed information regarding advertisement design measures such as what kind of signage design promotes purchase.

As described above with reference to FIGS. 1 to 3, according to the information processing device 100, it is possible to estimate various information such as whether the user intends to purchase a product or is satisfied with a service by using behavior information such as a traffic line or a gesture of the user. Furthermore, the information processing device 100 generates content such as effective signage for each user, thereby making it possible to promote the desire of purchase and evaluate advertising effects. That is, the information processing device 100 can provide an analysis result regarding useful retail measures.

### (1-2. Configuration of Information Processing Device according to Embodiment)

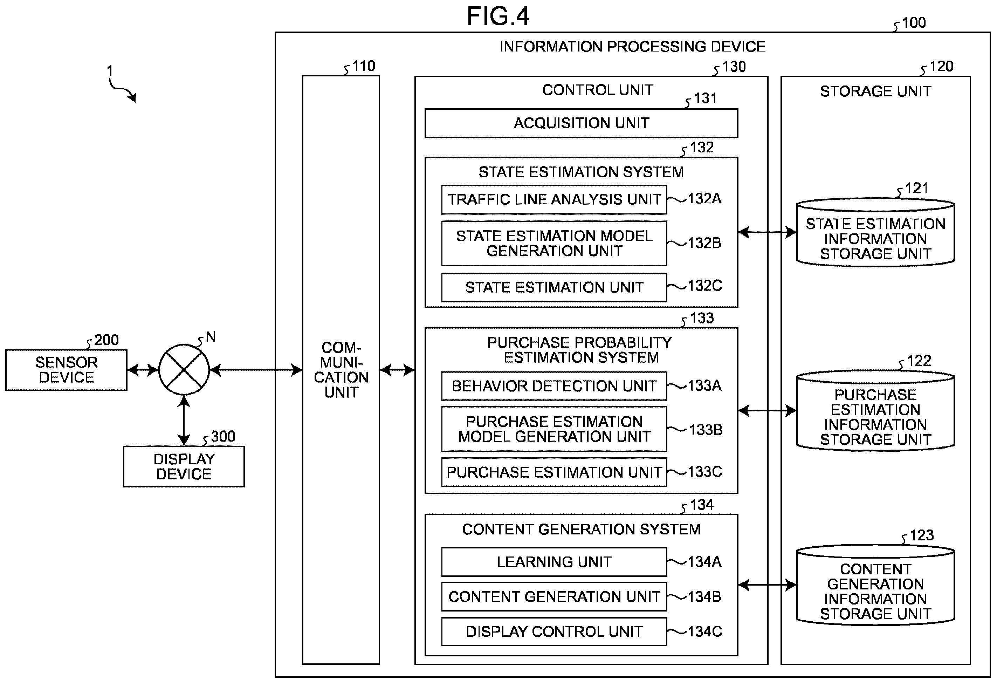

Next, configurations of an information processing system 1 and an information processing device 100 will be described. FIG. 4 is a diagram illustrating a configuration example of the information processing system 1 and the information processing device 100 according to the embodiment.

As illustrated in FIG. 4, the information processing system 1 includes an information processing device 100, a sensor device 200, and a display device 300.

As described above, the information processing device 100 is a device that executes information processing using various models learned by artificial intelligence (AI).

The sensor device 200 is a device that detects various types of information. For example, the sensor device 200 is a camera (image sensor) installed in a store. That is, the sensor device 200 is an information processing device having an imaging function, and is, for example, a digital camera or a digital video camera installed in a store or the like. In this case, the sensor device 200 includes a micro controller unit (MCU) or a micro processor unit (MPU), and also includes a CMOS image sensor (CIS), and performs a series of information processing such as image capturing, image storage, and image transmission/reception.

Note that the sensor device 200 may have a model learned in advance to recognize a predetermined target, and determine whether the predetermined target is included in the captured image. For example, the sensor device 200 may detect a person by image recognition, detect a specific behavior or gesture of the person, or estimate the age or gender of the person by using an AI model learned in advance. That is, the sensor device 200 may function as a terminal device (edge) in the information processing system 1.

Furthermore, the sensor device 200 is not limited to a camera, and may include any sensor for detecting various types of information. For example, the sensor device 200 may include a laser sensor that detects the presence of a customer or a user, or a distance measuring sensor such as a ToF sensor. Furthermore, the sensor device 200 may include a temperature sensor and a humidity sensor.

The display device 300 is a display that displays content such as digital signage. For example, the display device 300 is installed in a store, and displays advertisement content related to a product placed in the store. Note that the display device 300 is not necessarily installed in a store, and may be, for example, a user terminal (smartphone or the like) used by the user. In this case, the information processing device 100 transmits the generated content to the user terminal, and controls the user terminal to display the transmitted content.

Note that each device in FIG. 4 conceptually illustrates a function in the information processing system 1, and can take various modes depending on the embodiment. Furthermore, each device included in the information processing system 1 is not limited to the illustrated number.

Next, an internal configuration of the information processing device 100 will be described. As illustrated in FIG. 4, the information processing device 100 includes a communication unit 110, a storage unit 120, and a control unit 130. Note that the information processing device 100 may include an input unit (for example, a touch display or the like) that receives various operations from an administrator or the like who manages the information processing device 100, and a display unit (for example, a liquid crystal display or the like) for displaying various types of information.

The communication unit 110 is achieved by, for example, a network interface card (NIC), a network interface controller, or the like. The communication unit 110 is connected to a network N in a wired or wireless manner, and transmits and receives information to and from the sensor device 200, the display device 300, and the like via the network N. The network N is achieved by, for example, a wireless communication standard or system such as Bluetooth (registered trademark), the Internet, Wi-Fi (registered trademark), UWB (Ultra Wide Band), LPWA (Low Power Wide Area), and ELTRES (registered trademark).

The storage unit 120 is achieved by, for example, a semiconductor memory element such as a random access memory (RAM) or a flash memory, or a storage device such as a hard disk or an optical disk.

In the embodiment, the storage unit 120 includes a state estimation information storage unit 121, a purchase estimation information storage unit 122, and a content generation information storage unit 123. Each storage unit stores information corresponding to each model described in FIGS. 1 to 3. A detailed description of each storage unit will be given later together with processing using each model.

The control unit 130 is implemented by, for example, a central processing unit (CPU), an MPU, a graphics processing unit (GPU), or the like executing a program (for example, an information processing program according to the present disclosure) stored inside the information processing device 100 using a RAM or the like as a work area. Furthermore, the control unit 130 is a controller, and may be achieved by, for example, an integrated circuit such as an application specific integrated circuit (ASIC), a field programmable gate array (FPGA), or an MCU.

As illustrated in FIG. 4, the control unit 130 includes an acquisition unit 131, a state estimation system 132, a purchase probability estimation system 133, and a content generation system 134.

The acquisition unit 131 acquires various types of information used by the processing unit in the subsequent stage. For example, the acquisition unit 131 acquires traffic line information indicating a traffic line of a customer in a predetermined space such as a store. Specifically, the acquisition unit 131 acquires traffic line information from an image acquired by an imaging device (the sensor device 200 or the like) installed in a predetermined space.

The acquisition unit 131 also acquires result information corresponding to traffic line information. As an example, the acquisition unit 131 acquires a purchase behavior and a purchase history in a store of a customer corresponding to traffic line information. Specifically, the acquisition unit 131 acquires, on the basis of the POS data, information such as whether the customer has gone to the cash register, whether the customer has performed a payment behavior for a product or a service in the store, and an amount paid by the customer as a consideration for the product or the service in the store.

In addition, the acquisition unit 131 may acquire various types of information such as the average unit price of the products purchased by the customer, the total amount of the products, the total number of the purchased products, the type of the purchased products, the settlement means of the customer, and whether the customer has a point card that can be used in the store.

Further, the acquisition unit 131 may acquire behavior information of a customer on a traffic line. For example, the acquisition unit 131 may acquire information such as whether the customer finally purchases the product, how many times the customer picks up the product, and how frequently the customer returns the product (whether the customer returns the product). In addition, the acquisition unit 131 may acquire information such as a stay time of the customer, how many times the customer has viewed the pop advertisement or the signage in the store, and the number and configuration of accompanying persons of the customer.

The acquisition unit 131 may acquire mental information about a customer corresponding to traffic line information. For example, the acquisition unit 131 acquires evaluation information regarding the store from the customer after the customer stays in the store. The acquisition unit 131 acquires the evaluation information on the store from the customer by, for example, feedback (questionnaire collection, etc.) obtained from the customer.

Specifically, the acquisition unit 131 acquires mental information about how much the customer's desire of purchase (whether to decide what to buy at the time of visiting the store, whether to decide what to buy but not to buy, or the like). In addition, the acquisition unit 131 may acquire mental information such as whether the customer is satisfied with the service of the store, whether the customer grasps the arrangement of the product in the store (whether the position of the product has been easy to understand), whether the customer decides what to buy based on the pop advertisement or the signage in the store, and the like.

In addition, the acquisition unit 131 may acquire information regarding a behavior taken by a customer located in front of a shelf on which a product is placed. For example, the acquisition unit 131 acquires behavior information of a customer by image recognition or the like by a camera installed near a product shelf.

The acquisition unit 131 acquires, as the behavior information, line-of-sight information such as whether a customer pays attention to a product or a service provided by a store, for example. For example, the acquisition unit 131 may acquire the line-of-sight information by analyzing an image captured by a camera in the store. Specifically, the acquisition unit 131 can acquire information indicating whether the customer pays attention to a specific product using a known eye tracking method, a method such as image recognition, or the like. The acquisition unit 131 may acquire the line-of-sight information by analyzing the line of sight of the customer with a camera or a sensor embedded in a signage such as display device 300.

In addition, the acquisition unit 131 acquires, as the behavior information, the gesture information taken by the customer who looks at the product. For example, the acquisition unit 131 detects a predetermined gesture such as a behavior of looking at a smartphone or the like, a behavior of picking up a product and returning the product to the shelf again, scratching the head, or crossing arms, and acquires the detected behavior information. Note that the acquisition unit 131 may acquire a plurality of behaviors such as paying attention on a product and a subsequent behavior of a customer as a series of behavior information.

In addition, the acquisition unit 131 may acquire attribute information of the customer. For example, the acquisition unit 131 may acquire attribute information such as gender and age of the customer, presence or absence of a companion, and the like by image recognition. Note that the acquisition unit 131 may acquire the attribute information not by image recognition or the like but by a questionnaire to customers, input of attributes based on visual observation by a person in charge of a cash register, or the like.

In addition, the acquisition unit 131 may acquire behavior information of a customer for content such as an advertisement in a store. For example, the acquisition unit 131 acquires a result such as whether the customer has viewed the content, line-of-sight information such as which portion or which information of the content the customer has viewed, and the like.

In addition, the acquisition unit 131 may acquire predetermined external environment information. For example, the acquisition unit 131 may acquire information such as the weather, temperature, and time when the customer visits the store, the area in which the store is installed, and the like.

That is, the acquisition unit 131 acquires all information that can be learning data when the state estimation system 132, the purchase probability estimation system 133, and the content generation system 134 in the subsequent stage generate a model. In addition, the acquisition unit 131 acquires all information that can be an input when the state estimation system 132, the purchase probability estimation system 133, and the content generation system 134 perform estimation and generation processing using the model.

Hereinafter, processing executed by the state estimation system 132, the purchase probability estimation system 133, and the content generation system 134 will be sequentially described. Note that the processing executed by the state estimation system 132 corresponds to the state estimation processing illustrated in FIG. 1. The processing executed by the purchase probability estimation system 133 corresponds to the purchase probability estimation processing illustrated in FIG. 2. Furthermore, the processing executed by the content generation system 134 corresponds to the content generation processing illustrated in FIG. 3. In addition, although the acquisition unit 131 has been described separately from each system for convenience, the acquisition unit 131 may be incorporated in each system.

### (1-3. Information Processing by State Estimation System)

The state estimation system 132 will be described. As illustrated in FIG. 4, the state estimation system 132 includes a traffic line analysis unit 132A, a state estimation model generation unit 132B, and a state estimation unit 132C.

The traffic line analysis unit 132A analyzes traffic line information acquired by the acquisition unit 131. For example, the traffic line analysis unit 132A assigns an ID of a corresponding customer or user to each piece of acquired traffic line information, and stores the ID in the state estimation information storage unit 121.

The state estimation model generation unit 132B generates a state estimation model 50 by learning the relevance between the traffic line information and a behavior result in a space of a customer.

The state estimation unit 132C estimates at least one of a behavior, an attribute, or a mind of the user located in the space from the traffic line information of the user to be estimated by using the state estimation model 50.

Note that, in the following description, for simplification of description, each processing executed by the acquisition unit 131, the traffic line analysis unit 132A, the state estimation model generation unit 132B, and the state estimation unit 132C will be described as being executed by the state estimation system 132.

For example, the state estimation system 132 estimates the purchase behavior of the user in the store from the traffic line information of the user by using a model in which the relevance between the traffic line information and the purchase history of the customer in the store is learned. Specifically, the state estimation system 132 estimates whether the user performs a payment behavior for a product or a service in the store (that is, whether to go to the cash register) as the purchase behavior of the user. Alternatively, the state estimation system 132 may estimate an amount paid by the user as a consideration for a product or a service in the store as the purchase behavior of the user.

The state estimation system 132 can also estimate the mental state of the user located in the store from the traffic line information of the user by using the model in which the relevance between the traffic line information and the evaluation from the customer after the customer stays in the store is learned. For example, the state estimation system 132 estimates whether the user located in the store is satisfied with the service provided by the store from the traffic line information of the user.

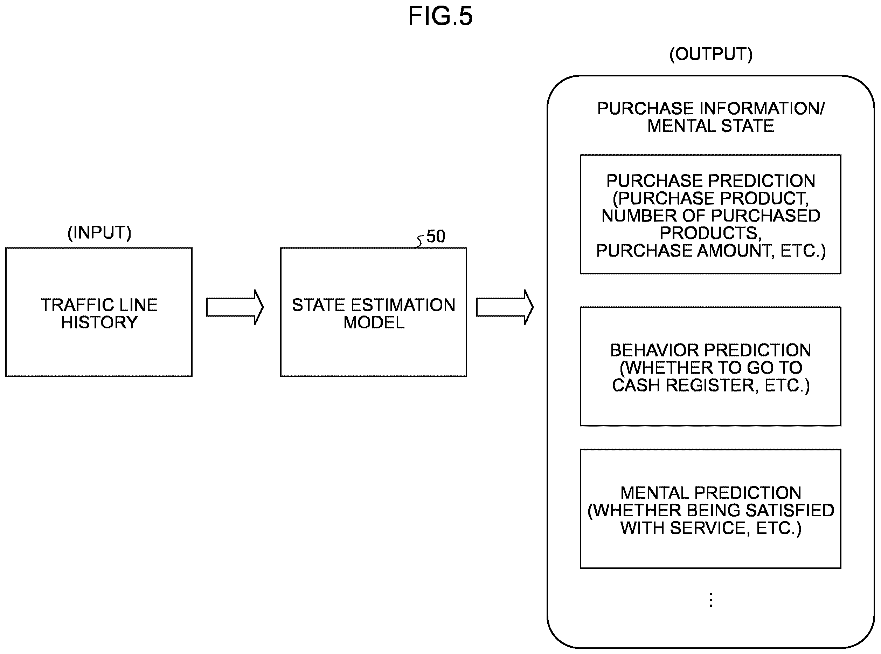

The processing of the above-described state estimation system 132 will be illustrated with reference to FIG. 5 and subsequent drawings. FIG. 5 is a diagram illustrating an outline of processing executed by the state estimation system 132.

As illustrated in FIG. 5, in a case where a user newly enters a store, the state estimation system 132 acquires traffic line information of the user. Then, the state estimation system 132 inputs the traffic line information to the state estimation model 50.

Then, the state estimation system 132 obtains various types of information output by the state estimation model 50. Note that the information output by the state estimation model 50 may be different depending on what information is learned as correct answer data (label) at the time of learning.

For example, in a case where the state estimation model 50 has learned the relationship between traffic line information and a purchase history, the state estimation system 132 estimates a purchase behavior predicted by the user (whether the user purchases a product, or the like) from the traffic line information of the user. Alternatively, in a case where the state estimation model 50 has learned the relationship between traffic line information and a behavior history of a customer, the state estimation system 132 estimates a purchase behavior predicted by the user (whether the user goes to a cash register before leaving the store, or the like) from the traffic line information of the user. Alternatively, in a case where the state estimation model 50 has learned the relationship between traffic line information and the mental information of the customer, the state estimation system 132 estimates a mental state predicted for the user (whether the user is satisfied with the service, or the like) from the traffic line information of the user. Note that, depending on the learning method or the mode of the model, the state estimation model 50 can also receive traffic line information as an input and output all information including purchase prediction, behavior prediction, and mental prediction.

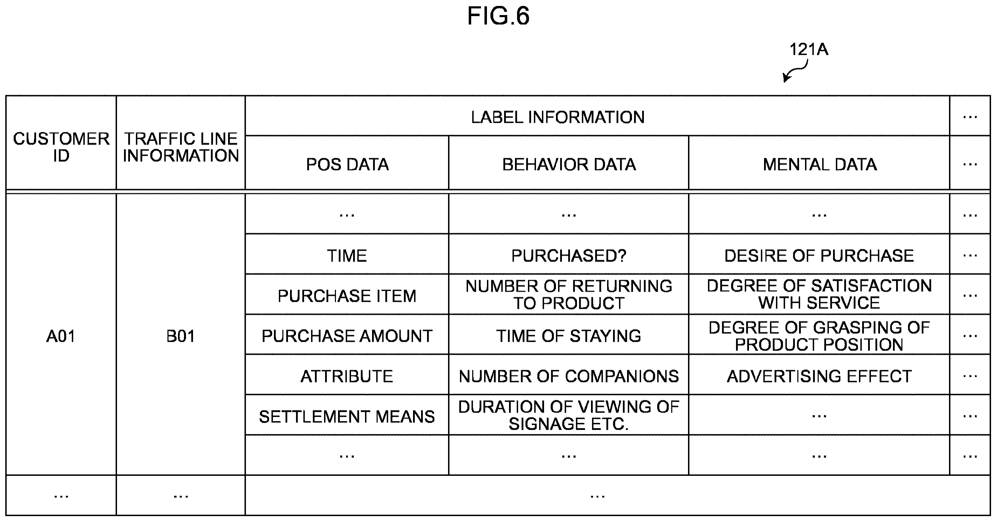

The label learned by the state estimation system 132 will be described with reference to FIG. 6. FIG. 6 is a diagram illustrating an example of learning data used by the state estimation system 132. FIG. 6 illustrates a data table 121A which is an example of the data table in the state estimation information storage unit 121.

As illustrated in FIG. 6, the data table 121A includes items such as "customer ID", "traffic line information", and "label information". Note that, hereinafter, the information stored in the data table 121A and the like may be conceptually indicated as "A01" or "B01", but actually, specific information to be described later is stored.

The "customer ID" is identification information for identifying a customer. "Traffic line information" is information indicating a traffic line of a customer. The "label information" is information used as correct answer data in learning. For example, the label information includes sub-items such as "POS data", "behavior data", and "mental data". The "POS data" includes information such as time when a customer enters or leaves a store, a purchased item, a purchased amount, an attribute, and a settlement means. The "behavior data" includes information such as a result of whether a customer has purchased a product, the number of times of returning, and the like. The "mental data" includes information such as customer's desire of purchase and the degree of satisfaction with the service in the store.

The state estimation system 132 generates the state estimation model 50 by performing machine learning using the data shown in the data table 121A as learning data.

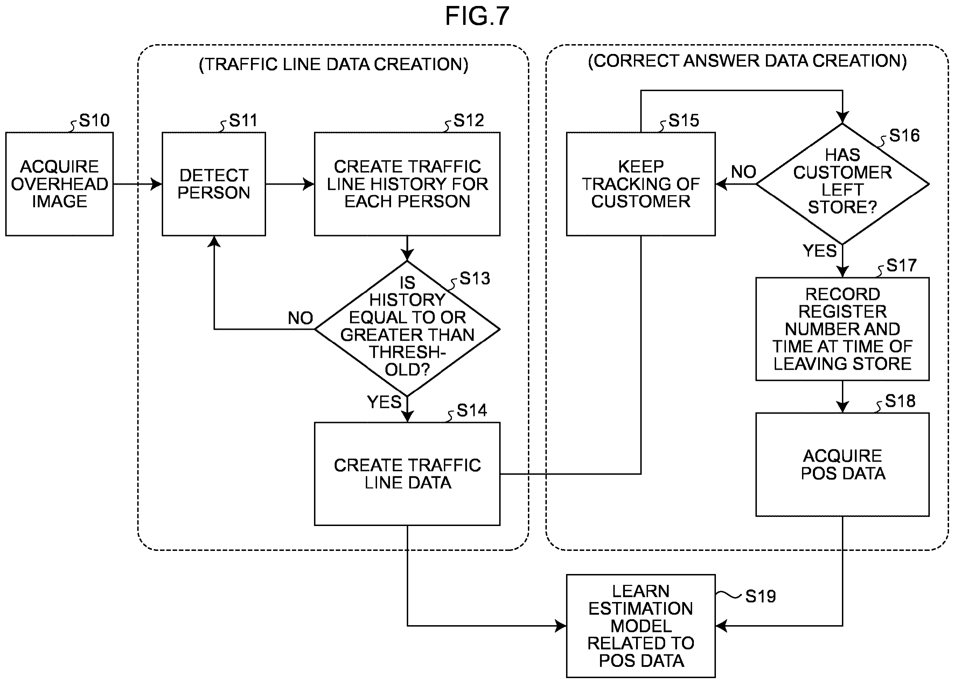

A processing procedure of the state estimation system 132 will be described with reference to FIG. 7 and subsequent drawings. FIG. 7 is a flowchart (1) illustrating a learning processing procedure by the state estimation system 132. FIG. 7 illustrates a processing procedure when the state estimation system 132 generates a model for estimating the purchase behavior of the user as the state estimation model 50.

First, the acquisition unit 131 acquires an overhead image from a camera or the like installed in a store (Step S10). The state estimation system 132 executes image recognition on the overhead image and detects a person (Step S11). The state estimation system 132 creates a traffic line history for each person (Step S12).

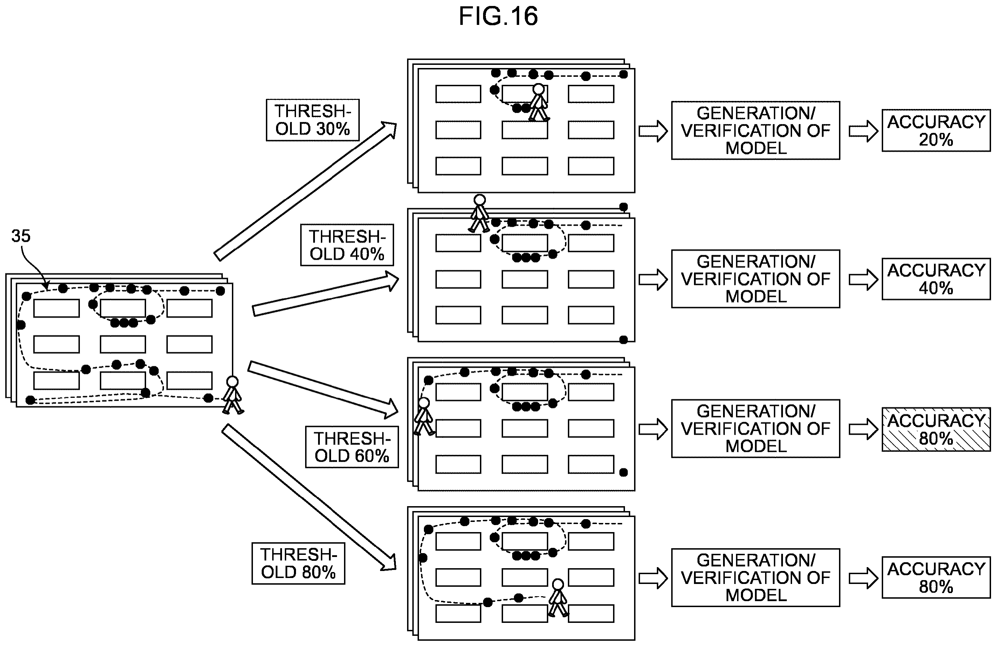

The state estimation system 132 determines whether the created traffic line history is a predetermined threshold or more (Step S13). The threshold is a value indicating how much traffic line information of the entire traffic line is used for processing. For example, when the threshold is 50%, the state estimation system 132 performs the processing using 50% of the traffic line in the whole traffic line. Details of the setting of the threshold will be described later with reference to FIG. 16.

In a case where the traffic line history is not equal to or greater than the threshold (Step S13; No), the state estimation system 132 continues to acquire the traffic line history of the person. On the other hand, in a case where the traffic line history is equal to or greater than the threshold (Step S13; Yes), the state estimation system 132 creates traffic line data (Step S14). Traffic line data is data representing a traffic line of a customer in a mode used for learning data.

Thereafter, the state estimation system 132 tracks a trend in the store of the customer (Step S15). For example, the state estimation system 132 tracks the trend of the customer in the store by the person detection and tracking processing using the camera, and determines whether the customer has left the store (Step S16).

In a case where the customer has not left the store (Step S16; No), the state estimation system 132 continues tracking the customer. On the other hand, in a case where the customer has left the store (Step S16; Yes), the state estimation system 132 records information for specifying the purchase history (for example, POS data) of the customer such as the number and time of the cash register through which the customer has passed before leaving the store (Step S17). Then, on the basis of the specified information, the state estimation system 132 acquires the POS data of the customer from an external server or the like that manages the POS data (Step S18).

The state estimation system 132 uses traffic line data and POS data (purchase history or the like) corresponding to the traffic line data as a learning set, and generates an estimation model related to the POS data (Step S19).

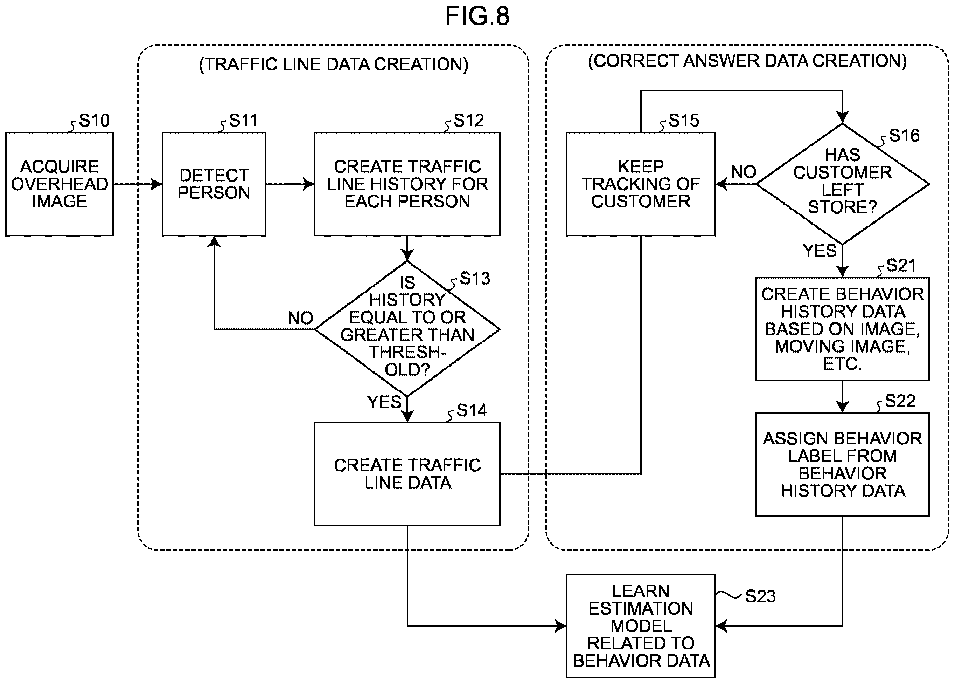

Next, a processing procedure when the state estimation system 132 generates a model for estimating a user's behavior as the state estimation model 50 will be described with reference to FIG. 8. FIG. 8 is a flowchart (2) illustrating a learning processing procedure by the state estimation system 132.

Since the processing up to Step S16 in FIG. 8 is similar to that in FIG. 7, the description thereof will be omitted. After the customer leaves the store, the state estimation system 132 detects a behavior of the customer from an image or a moving image including the customer and creates behavior history data (Step S21). Then, the state estimation system 132 assigns a behavior label from the behavior history data (Step S22). For example, the state estimation system 132 assigns, as a label, that a customer has performed a predetermined behavior such as whether the customer has gone to a cash register or whether the customer has returned a product.

Then, the state estimation system 132 generates an estimation model regarding the behavior data using the traffic line data and the behavior label corresponding to the traffic line data as a learning set (Step S23).

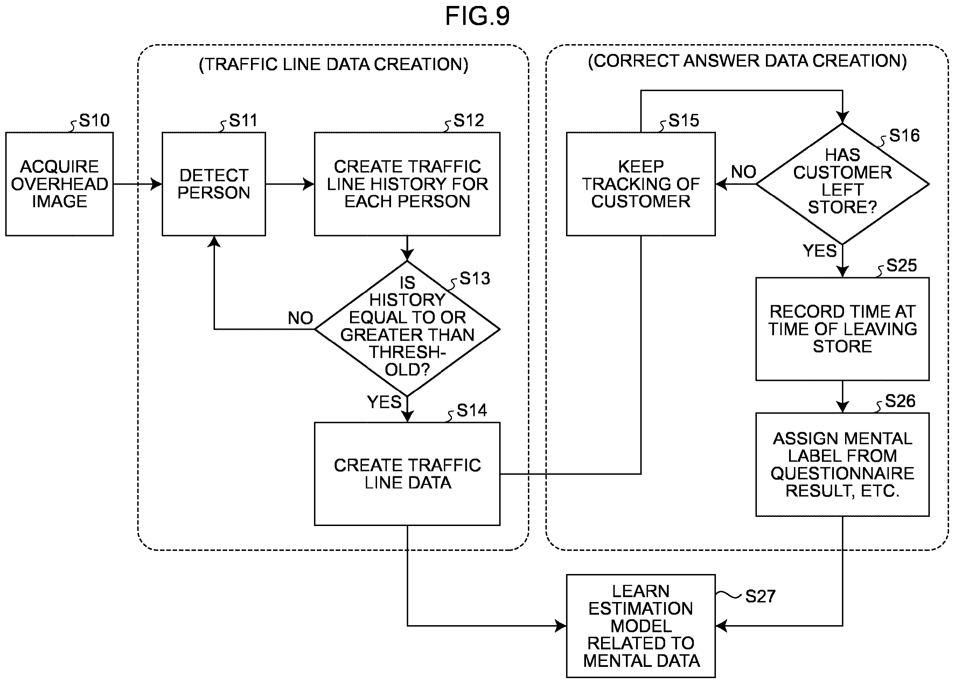

Next, a processing procedure when the state estimation system 132 generates a model for estimating a mental state of the user as the state estimation model 50 will be described with reference to FIG. 9. FIG. 9 is a flowchart (3) illustrating a learning processing procedure by the state estimation system 132.

Since the processing up to Step S16 in FIG. 9 is similar to that in FIG. 7, the description thereof will be omitted. The state estimation system 132 records the time when the customer has left the store after the customer has left the store (Step S25). Then, the state estimation system 132 inquires feedback such as a questionnaire to be acquired later and the store leaving time of the customer, and specifies a questionnaire result corresponding to the customer. The state estimation system 132 assigns a mental label from the specified questionnaire result or the like (Step S26). For example, the state estimation system 132 assigns, as a label, information indicating whether the customer is satisfied with the service of the store.

Then, the state estimation system 132 generates an estimation model regarding the mental data using the traffic line data and the mental label corresponding to the traffic line data as a learning set (Step S27).

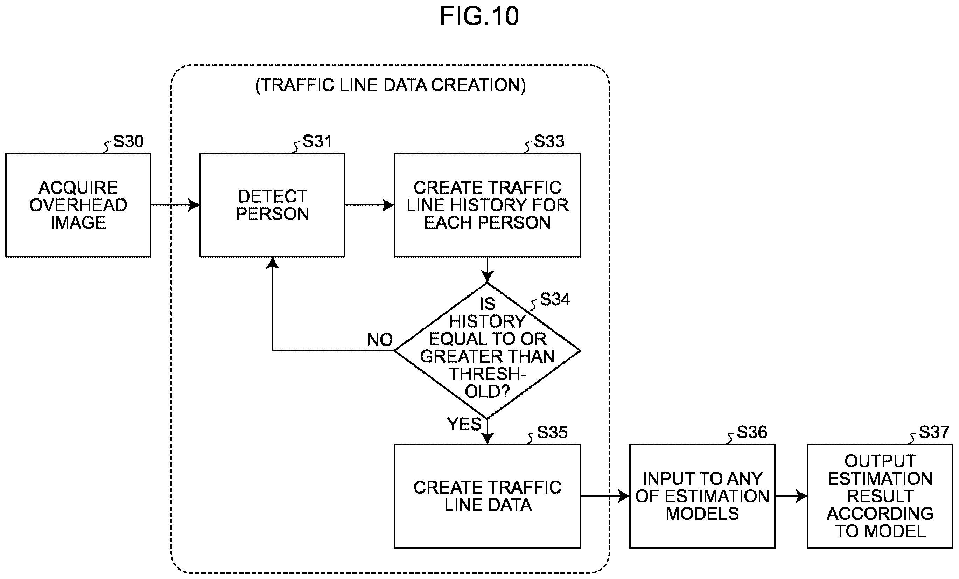

Next, a processing procedure when the state estimation system 132 estimates the user's behavior and mental state using the state estimation model 50 will be described with reference to FIG. 10. FIG. 10 is a flowchart (1) illustrating an estimation processing procedure by the state estimation system 132.

The acquisition unit 131 acquires an overhead image from a camera or the like installed in a store, similarly to when creating learning data (Step S30). The state estimation system 132 executes image recognition on the overhead image and detects a person (Step S31). The state estimation system 132 creates a traffic line history for each person (Step S33).

The state estimation system 132 determines whether the created traffic line history is a predetermined threshold or more (Step S34). For example, in a case where traffic line data is input to the state estimation model 50, the threshold is set based on whether the amount is sufficient to exceed predetermined accuracy.

In a case where the traffic line history is not equal to or greater than the threshold (Step S34; No), the state estimation system 132 continues to acquire the traffic line history of the user. On the other hand, in a case where the traffic line history is equal to or greater than the threshold (Step S34; Yes), the state estimation system 132 creates traffic line data of the user (Step S35). Traffic line data is data representing a traffic line of a user in a form that can be input into a model.

The state estimation system 132 inputs the created traffic line data to one of the estimation models illustrated in FIGS. 7 to 9 (Step S36). For example, the state estimation system 132 selects any model according to information desired to be estimated regarding the user (for example, information regarding whether to purchase a product or the like) according to a request of the store manager.

The state estimation system 132 inputs traffic line data to any model and outputs an inference result corresponding to the model (Step S37). As a result, the store manager can know the inference result such as whether the user purchases the product while the user stays in the store.

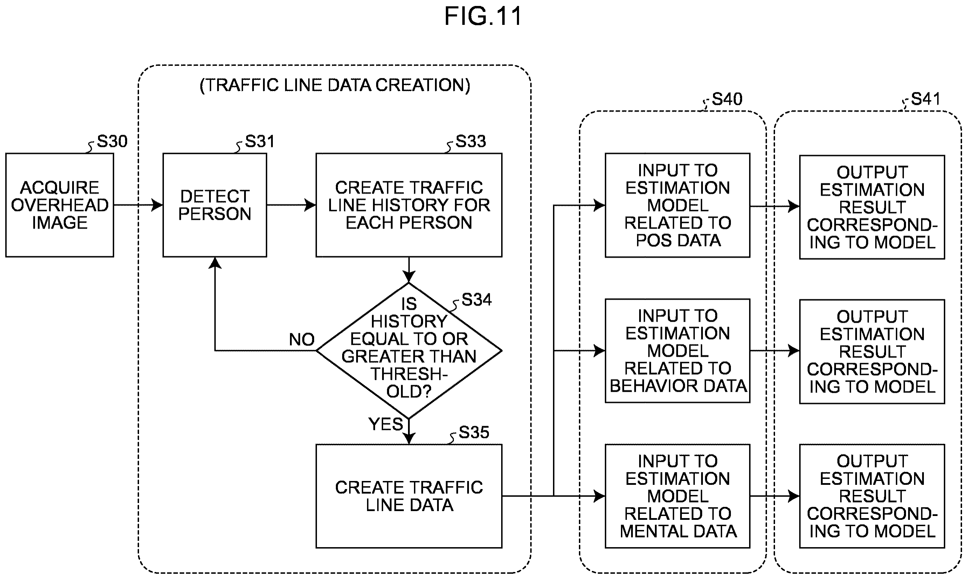

Note that the state estimation system 132 may input traffic line data to a plurality of models instead of selecting one of the models. This example will be described with reference to FIG. 11. FIG. 11 is a flowchart (2) illustrating an estimation processing procedure by the state estimation system 132.

Since the processing up to Step S35 in FIG. 11 is similar to that in FIG. 10, the description thereof will be omitted. After creating the traffic line data, the state estimation system 132 inputs the traffic line data to the plurality of models (Step S40). Then, the state estimation system 132 obtains an output corresponding to each model from each of the plurality of models (Step S41).

As a result, while the user stays in the store, the store manager can collectively obtain the purchase information such as what product the user purchases, the behavior information such as whether the user goes to the cash register, and the mental information such as whether the user is satisfied with the service.

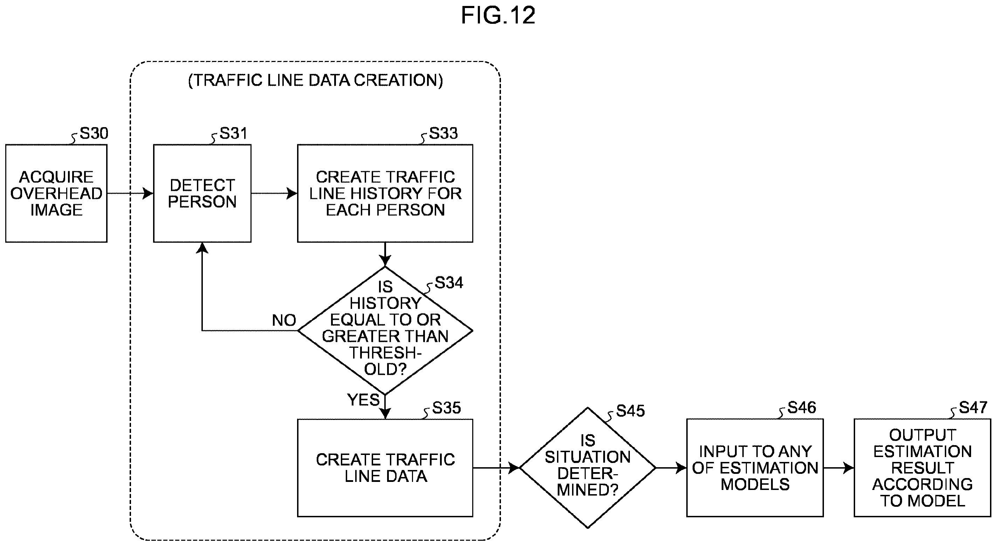

Further, the state estimation system 132 may select a model to which traffic line data is input according to a situation. This example will be described with reference to FIG. 12. FIG. 12 is a flowchart (3) illustrating an estimation processing procedure by the state estimation system 132.

Since the processing up to Step S35 in FIG. 12 is similar to that in FIG. 10, the description thereof will be omitted. After creating the traffic line data, the state estimation system 132 determines to which model the traffic line data is input (Step S45).

For example, in a case where the store is crowded, there is a high possibility that the store manager desires to know a stay time such as how long a plurality of users located in the store will stay in the store. Therefore, for example, when it is determined that the number of people located in the store exceeds the predetermined threshold (when it is determined that the store is crowded), the state estimation system 132 inputs traffic line data to a model for estimating the user's behavior (Step S46). Then, the state estimation system 132 outputs an estimation result of how long the user in the store will stay (Step S47).

Alternatively, in a case where the store are not crowded, there is a high possibility that the store manager desires to know how much the sales amount of the user in the store becomes (for example, how much price of a product to purchase). In this case, the state estimation system 132 inputs traffic line data to a model for estimating purchase information of the user. Then, the state estimation system 132 outputs an estimation result of how much the user in the store is likely to purchase a product.

As described above, the state estimation system 132 may determine whether to estimate the purchase behavior of the user or the mental state of the user according to the congestion status of the store. The state estimation system 132 can estimate the information desired by the store manager without applying a processing load by selectively using the model according to the situation of the store.

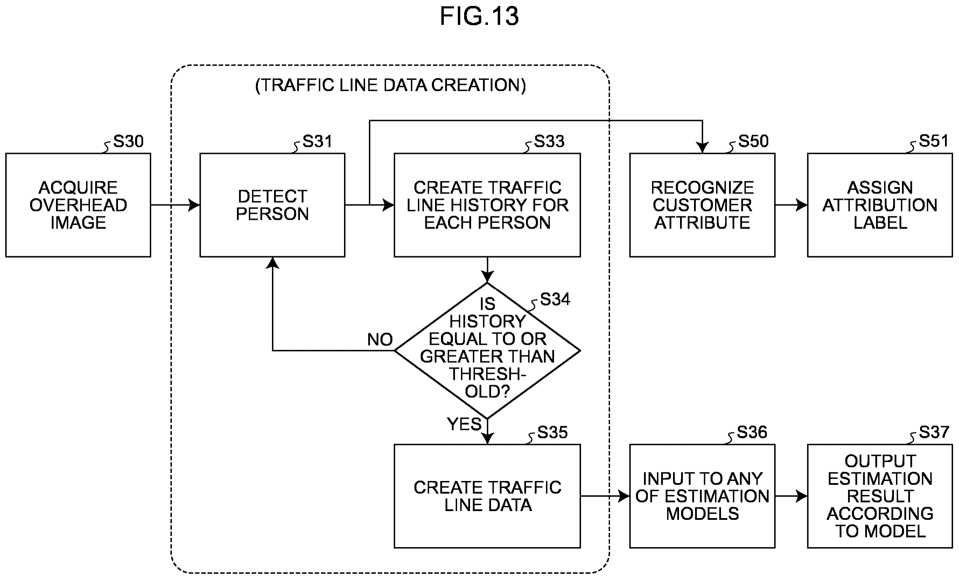

In addition to the estimation processing, the state estimation system 132 may perform processing of acquiring an attribute of the user and learning the acquired attribute. This example will be described with reference to FIG. 13. FIG. 13 is a flowchart (4) illustrating an estimation processing procedure by the state estimation system 132.

Since the processing up to Step S37 in FIG. 13 is similar to that in FIG. 10, the description thereof will be omitted. When a person is detected, the state estimation system 132 recognizes attributes such as the gender and the age of the user by using a known technique such as image recognition (Step S50). Then, the state estimation system 132 assigns an attribute label in association with the traffic line data (Step S51). Thereafter, the state estimation system 132 relearns the existing model by using the purchase result and the behavior result of the user and the traffic line data with the attribute label.

As described above, the state estimation system 132 may estimate the future behavior or mental state of the user located in the space from the traffic line information of the user to be estimated by using the model in which the relevance between the traffic line information and the attribute and the behavior result in the space of the customer (or the user) is learned. That is, the state estimation system 132 can perform estimation processing in which the user is further subdivided by accumulating data including the attribute. For example, in a case where traffic line data is obtained, in addition to the traffic line data, the state estimation system 132 can input information indicating that "a customer attribute of the traffic line data is female in 20's" to the model. In this case, the state estimation system 132 can predict the user's behavior or the like with higher accuracy as compared with a case where estimation is performed using only traffic line data.

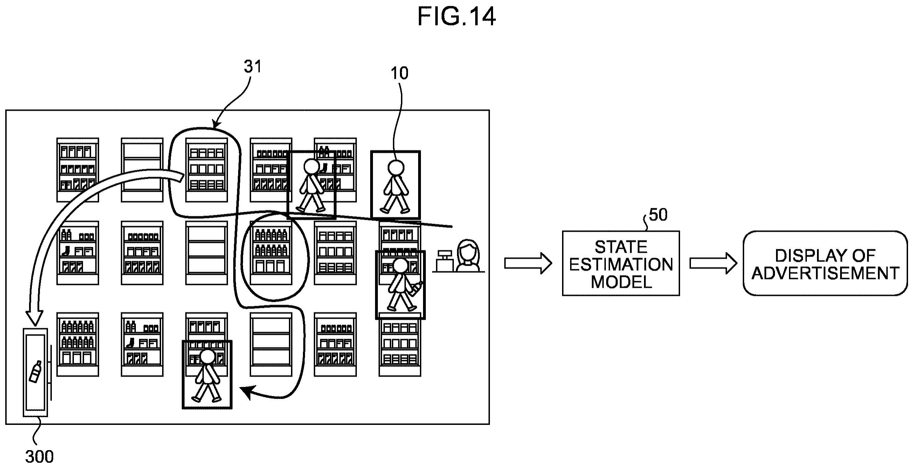

Next, a scene in which a result of estimation processing by the state estimation system 132 is utilized will be described. FIG. 14 is a diagram (1) illustrating an example of processing using the estimation result by the state estimation system 132.

As illustrated in FIG. 14, the state estimation system 132 acquires traffic line data 31 indicating traffic lines after user 10 enters a store. The state estimation system 132 inputs the traffic line data 31 to the state estimation model 50. For example, the state estimation system 132 estimates the current mental state, the desire of purchase, and the like in the store of the user 10 from the traffic line data 31. Specifically, the state estimation system 132 estimates information such as a product that the user 10 is likely to purchase and a product that the user 10 is considering purchase.

Then, the state estimation system 132 displays advertisement content of a product that the user 10 is highly likely to purchase on the display device 300 installed in the store for the product for which the user 10 has the desire of purchase. In this manner, the state estimation system 132 can further promote the desire of purchase of the user 10 by displaying an advertisement using the estimation result.

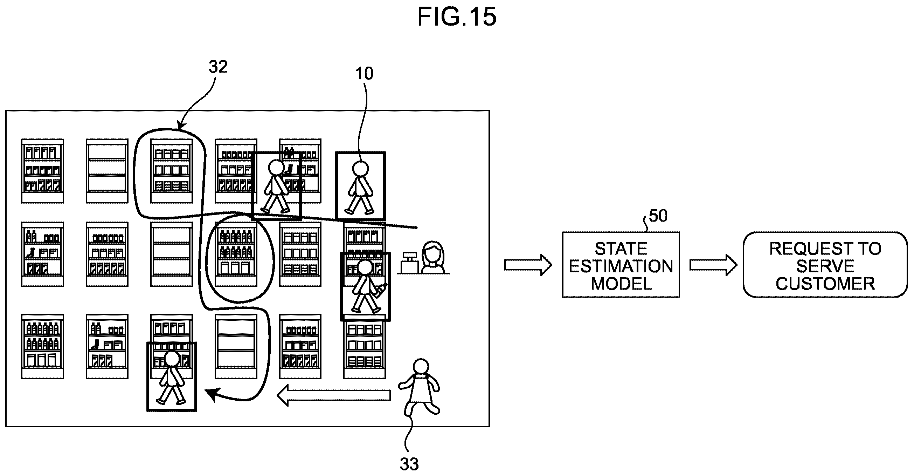

Furthermore, the result of the estimation processing by the state estimation system 132 can also be used in other scenes. FIG. 15 is a diagram (2) illustrating an example of processing using the estimation result by the state estimation system 132.

Similarly to FIG. 14, the state estimation system 132 acquires traffic line data 32 indicating traffic lines after the user 10 enters a store. The state estimation system 132 inputs the traffic line data 32 to the state estimation model 50. For example, the state estimation system 132 estimates, from the traffic line data 32, a mental state in which user 10 cannot find a product, or an area in which a product that user 10 wants to purchase is installed.

Then, when estimating that the user 10 is in a state of looking for a product, the state estimation system 132 instructs a clerk 33 to serve the customer to the user 10. In this manner, the state estimation system 132 can sense a situation in which the user is confused in the store or is looking for a product by using the estimation result, and can appropriately arrange the clerk 33. As a result, the state estimation system 132 can improve the degree of satisfaction of the user. Note that the state estimation system 132 may estimate the mental state of the user to estimate an area where the user is likely to move next in the store (an area where a product having a desire of purchase is installed, or the like). As a result, the state estimation system 132 can display an advertisement of a product or instruct a clerk to serve a customer in an area where the user is likely to move next.

Here, generation of an estimation model by the state estimation system 132 will be described with reference to FIG. 16. FIG. 16 is a diagram illustrating an outline of learning processing by the state estimation system 132.

As described above, the state estimation system 132 can perform learning and estimation by setting a certain ratio (threshold) at the time of model generation, instead of using all traffic lines of customers. At this time, it is desirable that model generation and estimation can be performed with less traffic line data with higher accuracy because the processing efficiency is high. Therefore, as illustrated in FIG. 16, the state estimation system 132 may use, for processing, data obtained by dividing traffic line data used for processing by a predetermined threshold.

Model generation and estimation processing in this case will be described. For example, traffic line data 35 illustrated in FIG. 16 is data indicating all traffic lines from entry to exit of a customer.

The state estimation system 132 sets some thresholds such as thresholds 30%, 40%, 60%, and 80%, and repeats model generation and estimation processing using traffic line data. Then, the state estimation system 132 collates the estimation processing with the correct answer data and calculates a verification result.

The state estimation system 132 sets the threshold such that the model has a lower threshold (with traffic line data with a smaller amount of information) and higher accuracy on the basis of the verification result. In the example of FIG. 16, in a case where traffic line data with the threshold of 60% is used, the accuracy of the model is the highest, and the amount of information of the traffic line data can be kept low. Therefore, the state estimation system 132 sets the threshold to 60%.

As described above, in the model generation, the state estimation system 132 can set an optimum threshold by temporarily setting the threshold, performing the model generation and estimation processing, and performing verification thereof. As a result, the state estimation system 132 can generate a highly accurate model while suppressing the processing load.

### (1-4. Information Processing by Purchase Probability Estimation System)

Returning to FIG. 4, the purchase probability estimation system 133 will be described. As illustrated in FIG. 4, the purchase probability estimation system 133 includes a behavior detection unit 133A, a purchase estimation model generation unit 133B, and a purchase estimation unit 133C.

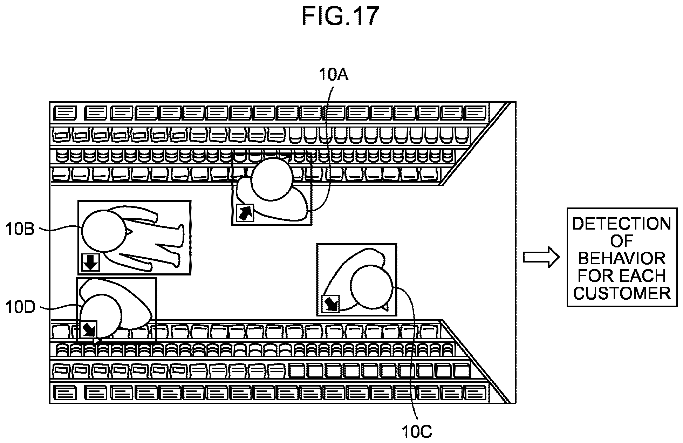

The behavior detection unit 133A detects a behavior or gesture of a customer or a user from the image or the like acquired by the acquisition unit 131. This point will be described with reference to FIG. 17. FIG. 17 is a diagram illustrating an outline of behavior detection by the behavior detection unit 133A.

FIG. 17 illustrates an example in which the customer 10A, the customer 10B, the customer 10C, and the customer 10D are detected in the overhead image. The behavior detection unit 133A detects, for example, various behaviors such as a behavior of the customer 10A gazing at a certain product or a behavior of the customer 10B stepping on a product without paying attention. Note that these types of detection processing are achieved by a behavior detection model learned to detect a specific behavior defined in advance. The behavior detection model may be mounted on a camera that functions as an edge terminal having a function of executing detection processing, or may be included in the information processing device 100.

The purchase estimation model generation unit 133B learns the relevance between the behavior information of the customer in the store detected by the behavior detection unit 133A and the purchase result of the customer in the store. Then, in a case where the behavior information of the user is input, the purchase estimation model generation unit 133B generates the purchase estimation model 60 that is a model for outputting the purchase information of the user in the store.

The purchase estimation unit 133C estimates the purchase information in the store of the user from the behavior of the user by using the purchase estimation model 60. For example, the purchase estimation unit 133C estimates a purchase probability indicating a probability that the user purchases a product.

At this time, the purchase estimation unit 133C may estimate the purchase probability of the user in the store using the purchase estimation model 60 in which the relevance between the behavior information of the customer after the customer pays attention to the product or service and the purchase result of the customer in the store is learned. That is, the purchase estimation unit 133C may input, to the purchase estimation model 60, information indicating that the user has looked at a product, a service, a price label of a product, or the like presented in a store, or a behavior taken after the user has looked at the product, service, price label, or the like, as a series of behavior information. As a result, the purchase estimation unit 133C performs estimation processing including a behavior of the user who seems to have no apparent relationship with the purchase of the product, so that it is possible to deeply analyze what behavior leads to the purchase.

Hereinafter, in order to simplify the description, each processing executed by the acquisition unit 131, the behavior detection unit 133A, the purchase estimation model generation unit 133B, and the purchase estimation unit 133C will be described as being executed by the purchase probability estimation system 133.

For example, the purchase probability estimation system 133 acquires the behavior information of the customer after the customer pays attention to the product or service provided by the store and the purchase result of the customer in the store. Then, the purchase probability estimation system 133 generates a model in which the relevance between the behavior information of the customer after the customer pays attention to the product or service and the purchase result of the customer in the store is learned. Using such a model, the purchase probability estimation system 133 estimates the purchase probability of the user in the store from the product or service that the user pays attention to and the behavior information of the user. Note that the behavior information of the user used for estimation may be one behavior or a combination of a plurality of behaviors.

Further, the purchase probability estimation system 133 may acquire the attribute of the customer and generate a model in which the relevance between the behavior information and the attribute and the purchase result of the customer is learned. In this case, the purchase probability estimation system 133 estimates the purchase probability of the user in the store from the behavior information and attribute of the user by using such a model.

Note that the purchase probability estimation system 133 can associate a customer with a purchase result of the customer by, for example, at least one of face recognition processing based on an image obtained by imaging the customer, specification of store fixtures used by the customer, and matching processing of clothes of the customer based on the image. For example, the purchase probability estimation system 133 can associate the customer with the POS data on the basis of the matching degree between the face and clothes of the customer captured by the in-store camera and the face and clothes of the customer captured by the camera in front of the cash register. The store fixtures used by the customer is, for example, a shopping basket used by the customer. The purchase probability estimation system 133 can associate the customer with the POS data by recognizing a radio frequency identification (RFID) tag attached to the shopping basket at the cash register.

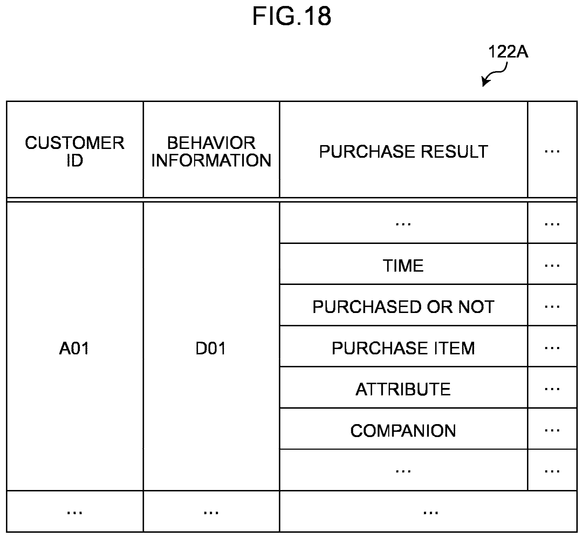

Processing by the purchase probability estimation system 133 will be described with reference to FIG. 18 and subsequent drawings. First, information used as learning data in model generation by the purchase probability estimation system 133 will be described. FIG. 18 is a diagram illustrating an example of learning data used by the purchase probability estimation system 133. FIG. 18 illustrates a data table 122A which is an example of the data table in the purchase estimation information storage unit 122.

As illustrated in FIG. 18, the data table 122A includes items such as "customer ID", "behavior information", and "purchase result".

The "customer ID" is identification information for identifying a customer. The "behavior information" is information regarding a behavior or gesture taken by the customer. Note that the behavior information may include a plurality of behaviors and gestures. "Purchase result" indicates a customer's purchase result. The purchase result includes information on whether a customer having taken a behavior or gesture has purchased a product as a result, and the time, the item of the product, and the like if the customer has purchased a product. In addition, the purchase result may include attributes such as age and gender of the customer, and information such as presence or absence of a companion.

The purchase probability estimation system 133 generates the purchase estimation model 60 using the purchase result associated with the behavior information of the customer as correct answer data. As an example, the purchase probability estimation system 133 generates the purchase estimation model 60 using a series of behavior information indicating that a customer looks at a smartphone or the like after looking at a product and a result that the customer has purchased the product as a learning data set.

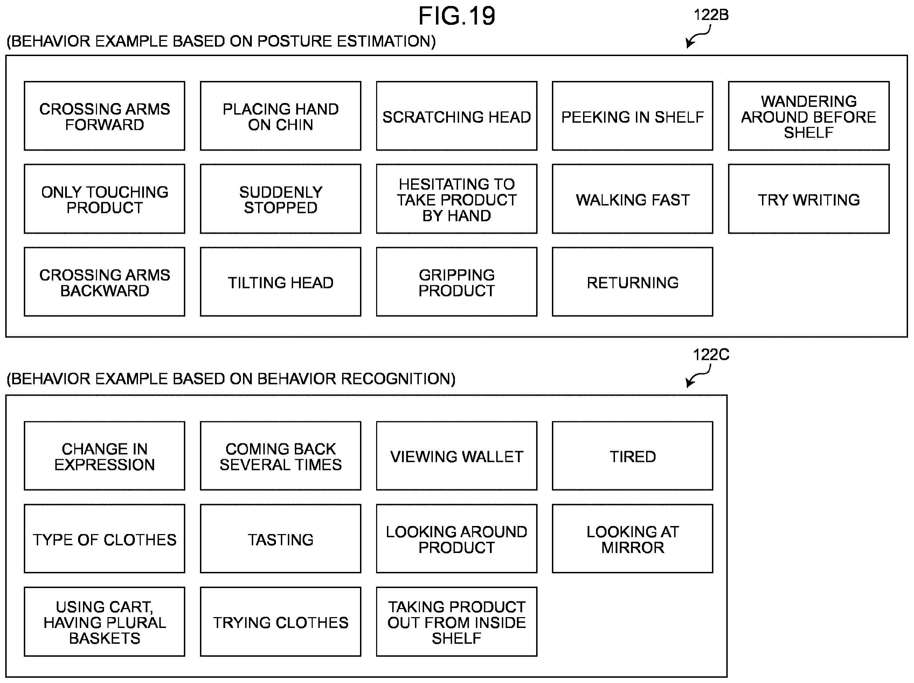

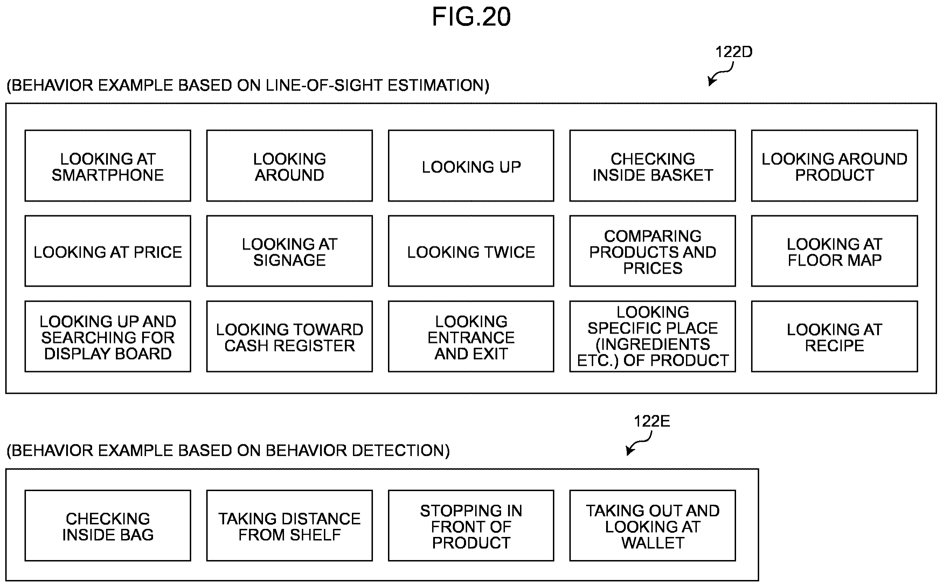

The behavior or gesture detected by the purchase probability estimation system 133 may include various things. A behavior detected by the purchase probability estimation system 133 will be described with reference to FIGS. 19 and 20. FIG. 19 is a diagram (1) illustrating a behavior example detected by the purchase probability estimation system 133.

FIG. 19 illustrates a behavior example 122B based on posture estimation of the customer and a behavior example 122C based on behavior recognition. For example, the purchase probability estimation system 133 uses a known posture estimation technique (for example, skeleton estimation) for the customer to detect a behavior or gesture such as the customer crossing arms in front of the body or placing a hand on the chin, and stores the detected behavior or gesture.

In addition, the purchase probability estimation system 133 detects, for the customer, a behavior or gesture such as a change in the expression of the customer or the customer returning to the same product shelf many times using a known behavior recognition technology (for example, face recognition, how many times a customer has been detected in a certain imaging range, or the like), and stores the detected behavior or gesture.

Next, another behavior detected by the purchase probability estimation system 133 will be described with reference to FIG. 20. FIG. 20 is a diagram (2) illustrating a behavior example detected by the purchase probability estimation system 133.

FIG. 20 illustrates a behavior example 122C based on line-of-sight estimation of a customer and a behavior example 122D based on detection of a motion. For example, the purchase probability estimation system 133 detects a behavior or gesture of the customer looking at a smartphone or the like, looking around, or looking at a specific product using a known line-of-sight detection technology (for example, eye tracking) for the customer, and stores the detected behavior or gesture.

In addition, the purchase probability estimation system 133 detects, for the customer, a behavior or gesture such as confirmation of the inside of the bag by the customer or separation from the shelf on which the product is placed beyond a predetermined distance using a known motion detection technique, and stores the detected behavior or gesture.

Note that the behaviors or gestures illustrated in FIGS. 19 and 20 are examples, and the behaviors or gestures detected by the purchase probability estimation system 133 are not limited to the examples illustrated in FIGS. 19 and 20.

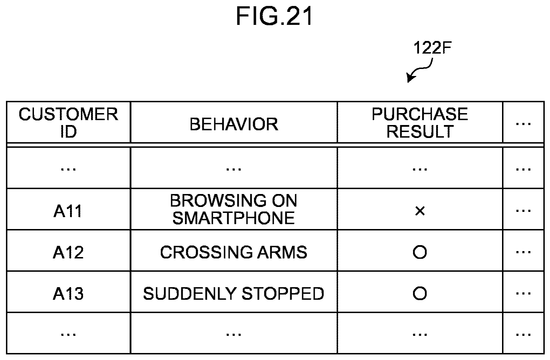

Next, FIG. 21 illustrates an example of behavior information stored in the purchase probability estimation system 133. FIG. 21 is a diagram (1) illustrating an example of behavior information used by the purchase probability estimation system 133. FIG. 21 illustrates a data table 122F which is an example of the data table in the purchase estimation information storage unit 122.

As illustrated in FIG. 21, the data table 122F includes items such as "customer ID", "behavior", and "purchase result". The "behavior" indicates each of the behaviors or gestures detected for the customer. Note that the item of behavior may include a plurality of series of behaviors. Each behavior or a series of behaviors corresponds to the behavior information of the customer.

In the example illustrated in FIG. 21, it is indicated that a customer A11 who has taken a behavior of browsing the smartphone has not purchased the product in the store. Further, in another example, it is indicated that a customer A12 who crosses his/her arms in front of the product has purchased the product at the store.

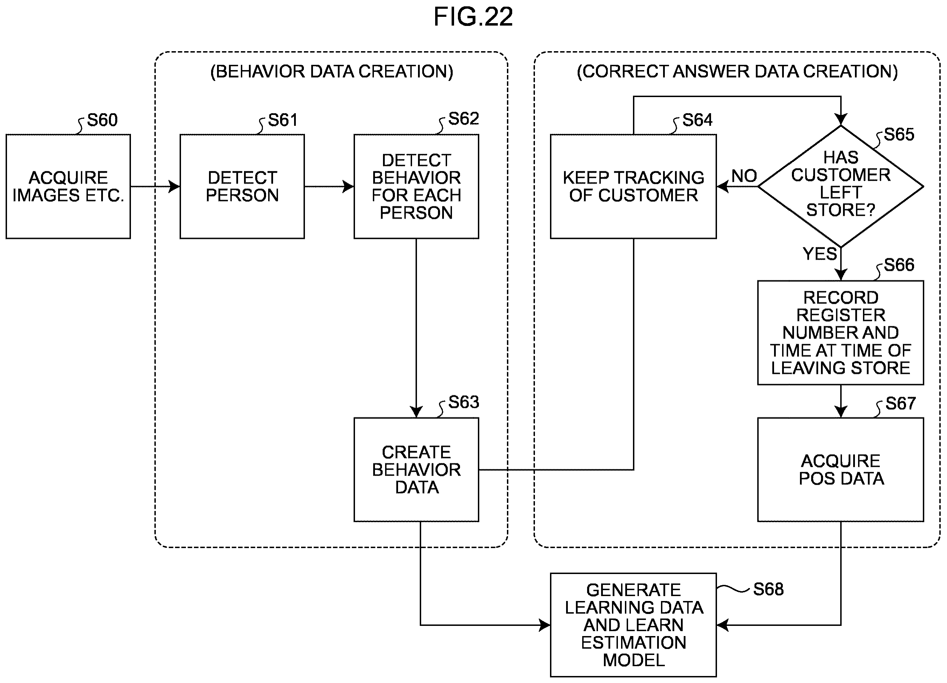

The purchase probability estimation system 133 estimates the purchase probability of the user by using the above-described various types of information. A processing procedure of the purchase probability estimation system 133 will be described with reference to FIG. 22 and subsequent drawings. FIG. 22 is a flowchart (1) illustrating a learning processing procedure by the purchase probability estimation system 133.

First, the acquisition unit 131 acquires an image or the like obtained by capturing a customer from a camera or the like installed near a product shelf (Step S60). The purchase probability estimation system 133 executes image recognition on the image and detects a person (Step S61). The purchase probability estimation system 133 detects a behavior for each person (Step S62). The purchase probability estimation system 133 creates behavior data for each person in a mode that can be used as learning data (Step S63).

Thereafter, the purchase probability estimation system 133 tracks the trend of the customer in the store (Step S64). For example, the purchase probability estimation system 133 tracks the trend of the customer in the store by the person detection and tracking processing using the camera, and determines whether the customer has left the store (Step S65).

In a case where the customer has not left the store (Step S65; No), the purchase probability estimation system 133 continues tracking the customer. On the other hand, in a case where the customer has left the store (Step S65; Yes), the purchase probability estimation system 133 records information for specifying the purchase history (for example, POS data) of the customer such as the number and time of the cash register through which the customer passed before leaving the store (Step S66). Then, the purchase probability estimation system 133 acquires the POS data of the customer from an external server or the like that manages the POS data on the basis of the specified information (Step S67).

The purchase probability estimation system 133 learns an estimation model related to POS data by using the behavior data and POS data (purchase history or the like) corresponding to the behavior data as a learning set (Step S68).

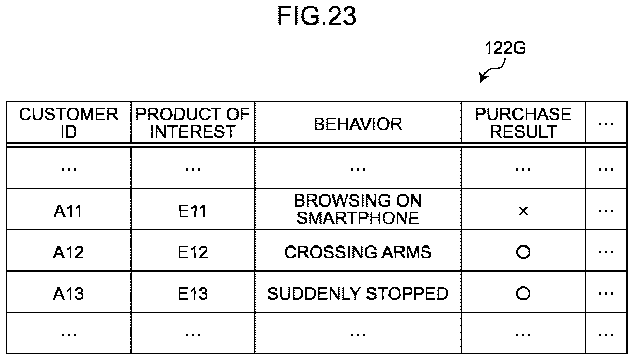

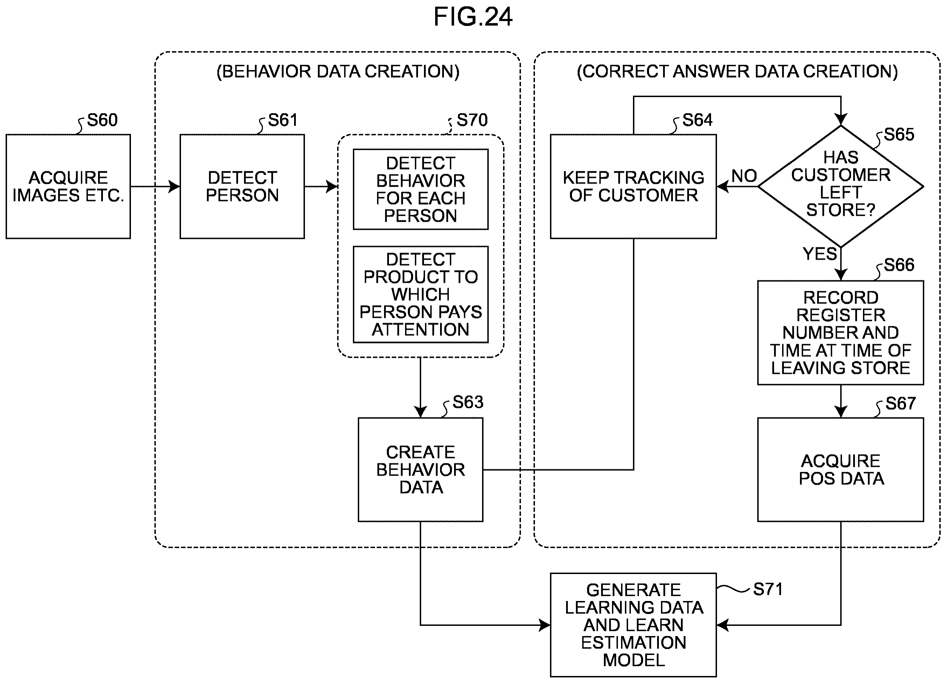

Next, with reference to FIGS. 23 and 24, an example will be described in which the purchase probability estimation system 133 generates an estimation model including not only the behavior of the customer but also the product that the customer has paid attention to before the behavior.

First, an example of behavior information used for model generation in this case will be described with reference to FIG. 23. FIG. 23 is a diagram (2) illustrating an example of behavior information used by the purchase probability estimation system 133. FIG. 23 illustrates a data table 122G which is an example of the data table in the purchase estimation information storage unit 122.

As illustrated in FIG. 23, the data table 122G includes an item "product of interest" in addition to the data table 122F. The product of interest indicates a product gazed by the customer. Note that the product of interest may be one specific product or a type of product. In addition, the product of interest may be an attribute of the product, such as a special price product or a limited product, instead of the type of the product.

In the example illustrated in FIG. 23, the customer A11 who pays attention to a product E11 thereafter takes a behavior of browsing a smartphone, and as a result, does not purchase the product in the store. Further, in another example, the customer A12 who pays attention to a product E12 thereafter crosses his/her arms in front of the product, and the customer A12 consequently purchases the product at the store.

The procedure of the estimation model generation processing in this case will be described with reference to FIG. 24. FIG. 24 is a flowchart (2) illustrating a learning processing procedure by the purchase probability estimation system 133.

Since the processing from Step S60 to Step S67 in FIG. 24 is similar to that in FIG. 22, the description thereof will be omitted. When detecting a behavior of the customer, the purchase probability estimation system 133 acquires information regarding a product that the customer pays attention to (Step S70).

In a case where the purchase result of the customer is obtained, the purchase probability estimation system 133 learns the estimation model as a learning data set in association with behavior data including a product that the customer pays attention to with the purchase result (Step S71).

By operating such an estimation model, the purchase probability estimation system 133 can perform more detailed analysis on a product having a low purchase probability, for example.

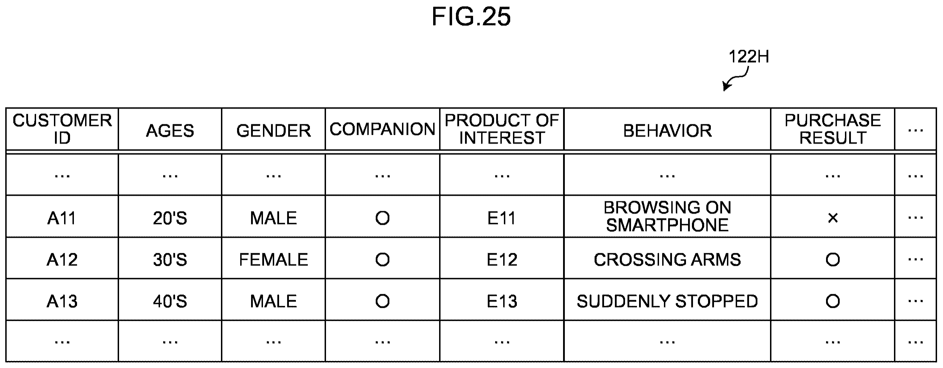

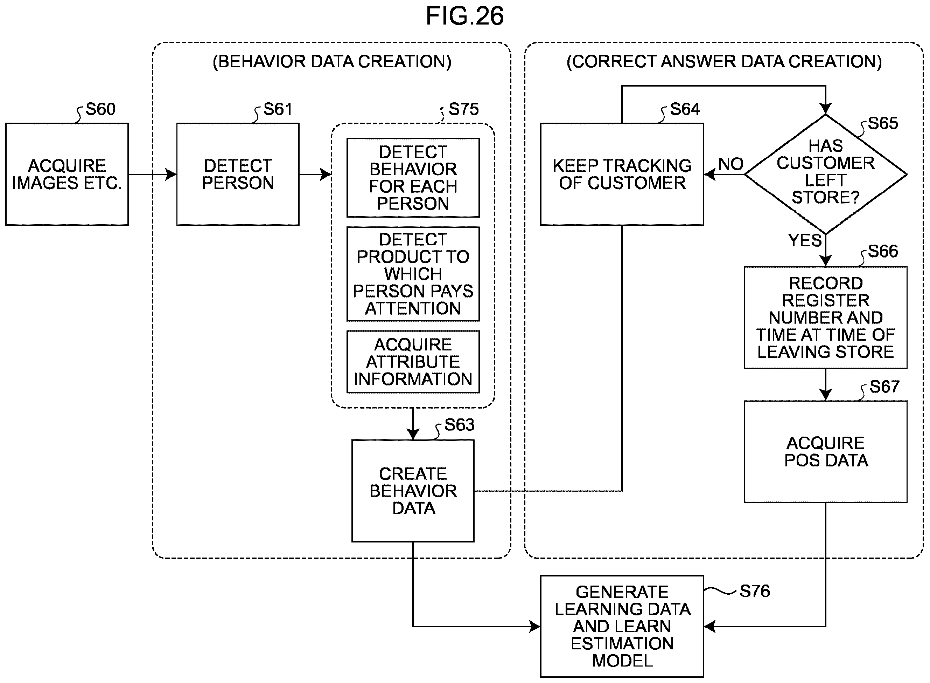

Next, an example in which the purchase probability estimation system 133 generates an estimation model including not only the behavior of the customer but also the attribute of the customer will be described with reference to FIGS. 25 and 26.

First, an example of behavior information used for model generation in this case will be described with reference to FIG. 25. FIG. 25 is a diagram (3) illustrating an example of behavior information used by the purchase probability estimation system 133. FIG. 25 illustrates a data table 122H which is an example of the data table in the purchase estimation information storage unit 122.

As illustrated in FIG. 25, the data table 122H includes items of "ages", "gender", and "companion" in addition to the data table 122G. That is, the data table 122H has attribute information such as the age and gender of the customer, a companion (family structure), and the like. Note that the attribute of the customer is not limited to the example, and may include various types of information. For example, the attribute information may include all characteristic information of an individual such as a customer's nationality. In addition, the attribute information may include all pieces of characteristic information regarding a person having a relationship with the customer, such as the number of accompanying persons and attribute information of the accompanying person. Specifically, the purchase probability estimation system 133 detects the attribute of the customer on the basis of the clothes of the customer and the face recognition technology, and acquires the detected information.

In the example illustrated in FIG. 25, the customer A11 is a customer who is in his/her 20's, is a male, and has a companion, and takes a behavior of browsing a smartphone after focusing on the product E11, and as a result, does not purchase the product in the store.

The procedure of the estimation model generation processing in this case will be described with reference to FIG. 26. FIG. 26 is a flowchart (3) illustrating a learning processing procedure by the purchase probability estimation system 133.

Since the processing from Step S60 to Step S67 in FIG. 26 is similar to that in FIG. 22, the description thereof will be omitted. When detecting the behavior of the customer, the purchase probability estimation system 133 acquires information regarding a product that the customer pays attention to and attribute information of the customer (Step S75).

In a case where the purchase result of the customer is obtained, the purchase probability estimation system 133 learns the estimation model as a learning data set in association with the attribute of the customer, the behavior data including the product that the customer pays attention to, and the purchase result (Step S76) .

By operating such an estimation model, the purchase probability estimation system 133 can perform more detailed analysis on, for example, what age group the customer's purchase probability is low.

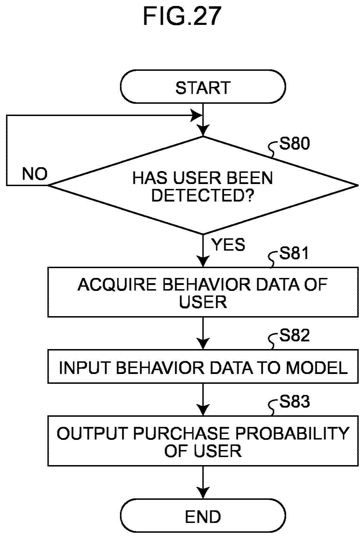

Next, a procedure of inference processing using the estimation model will be described. FIG. 27 is a flowchart (1) illustrating an estimation processing procedure by the purchase probability estimation system 133. The example of FIG. 27 illustrates an example in which the purchase probability estimation system 133 uses the estimation model generated by the procedure illustrated in FIG. 22.

First, the purchase probability estimation system 133 determines whether a user to be estimated has been detected in a store (Step S80). In a case where the user is not detected (Step S80; No), the purchase probability estimation system 133 waits until detecting a user.

In a case where a user is detected (Step S80; Yes), the purchase probability estimation system 133 acquires behavior data of the user (Step S81). Subsequently, the purchase probability estimation system 133 inputs the acquired behavior data to a model for estimating the purchase probability (Step S82). Then, the purchase probability estimation system 133 outputs the purchase probability of the user (Step S83).

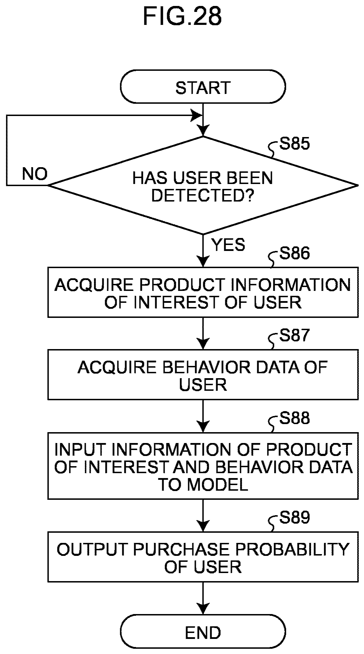

Next, an example in which the purchase probability estimation system 133 uses the estimation model generated by the procedure illustrated in FIG. 24 will be described. FIG. 28 is a flowchart (2) illustrating an estimation processing procedure by the purchase probability estimation system 133.

First, the purchase probability estimation system 133 determines whether a user to be estimated has been detected in a store (Step S85). In a case where a user is not detected (Step S85; No), the purchase probability estimation system 133 waits until detecting a user.

In a case where a user is detected (Step S85; Yes), the purchase probability estimation system 133 acquires information on a product that the user pays attention to (Step S86). Then, the purchase probability estimation system 133 acquires behavior data including a behavior taken by the user after focusing on the product (Step S87).

Subsequently, the purchase probability estimation system 133 inputs information and behavior data of a product of interest to the user to a model for estimating the purchase probability (Step S88). Then, the purchase probability estimation system 133 outputs the purchase probability of the user (Step S89).

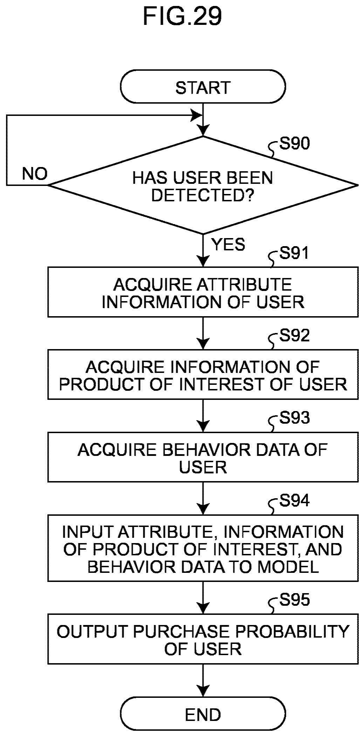

Next, an example in which the purchase probability estimation system 133 uses the estimation model generated by the procedure illustrated in FIG. 26 will be described. FIG. 29 is a flowchart (3) illustrating an estimation processing procedure by the purchase probability estimation system 133.

First, the purchase probability estimation system 133 determines whether a user to be estimated has been detected in a store (Step S90). In a case where a user is not detected (Step S90; No), the purchase probability estimation system 133 waits until detecting a user.

In a case where the user is detected (Step S90; Yes), the purchase probability estimation system 133 acquires the attribute of the customer (Step S91). Further, the purchase probability estimation system 133 acquires information on a product that the user pays attention to (Step S92). Then, the purchase probability estimation system 133 acquires behavior data including a behavior taken by the user after focusing on the product (Step S93).

Subsequently, the purchase probability estimation system 133 inputs the attribute of the user, information and behavior data of a product of interest to the user to a model for estimating the purchase probability (Step S94). Then, the purchase probability estimation system 133 outputs the purchase probability of the user (Step S95).

### (1-5. Information Processing by Content Generation System)

Returning to FIG. 4, the content generation system 134 will be described. As illustrated in FIG. 4, the content generation system 134 includes a learning unit 134A, a content generation unit 134B, and a display control unit 134C. Note that data and information used by the content generation system 134 in each processing to be described later are stored in the content generation information storage unit 123.

The learning unit 134A learns the relevance between the behavior information of the customer and the advertising effect of the content presented in the store, and generates a model for content generation.

The content generation unit 134B generates optimized content, which is content newly generated for the user, from the behavior information of the user to be estimated by using a model in which the relevance between the behavior information of the customer and the advertising effect of the content presented in the store is learned.

The display control unit 134C controls the display device 300 or the like to display the optimized content generated by the content generation unit 134B.

Hereinafter, in order to simplify the description, each processing executed by the acquisition unit 131, the learning unit 134A, the content generation unit 134B, and the display control unit 134C will be described as being executed by the content generation system 134.

For example, the content generation system 134 generates the optimized content using the model learned using the purchase history of the customer in the store as the advertising effect. For example, the content generation system 134 may generate the optimized content using a model learned using a result such as whether a customer who has viewed the content has taken a payment behavior for a product or a service in a store as the purchase history. Alternatively, the content generation system 134 may generate the optimized content by using a model learned using an amount of money paid as a consideration for a product or a service in a store by a customer who views the content, as the purchase history.

In addition, the content generation system 134 may generate the optimized content using a model learned using the feature indicated at the position corresponding to the line-of-sight information in the content and the purchase history of the customer. Specifically, the content generation system 134 may generate the optimized content so as to emphasize the feature indicated at the position gazed by the user in the content on the basis of the line-of-sight information of the user.

In addition, the content generation system 134 may generate the optimized content by using a model in which the relevance between the traffic line information of the customer and the purchase history of the customer in the store is learned. For example, the content generation system 134 acquires installation information (whether the corner is a corner where discount products are placed or a corner where limited-time products are placed) of a product or a service in a store associated with traffic line information of a user. Then, the content generation system 134 may generate the optimized content so as to emphasize the display indicating the feature related to the installation information in the content on the basis of the installation information.

In addition, the content generation system 134 may generate the optimized content using a model in which the relevance between the attribute information of the customer and the purchase history of the customer in the store is learned. Furthermore, the content generation system 134 may generate the optimized content using a model in which the relevance between external environment information such as weather, temperature, time, and region when the customer views the content and the purchase history of the customer is learned.

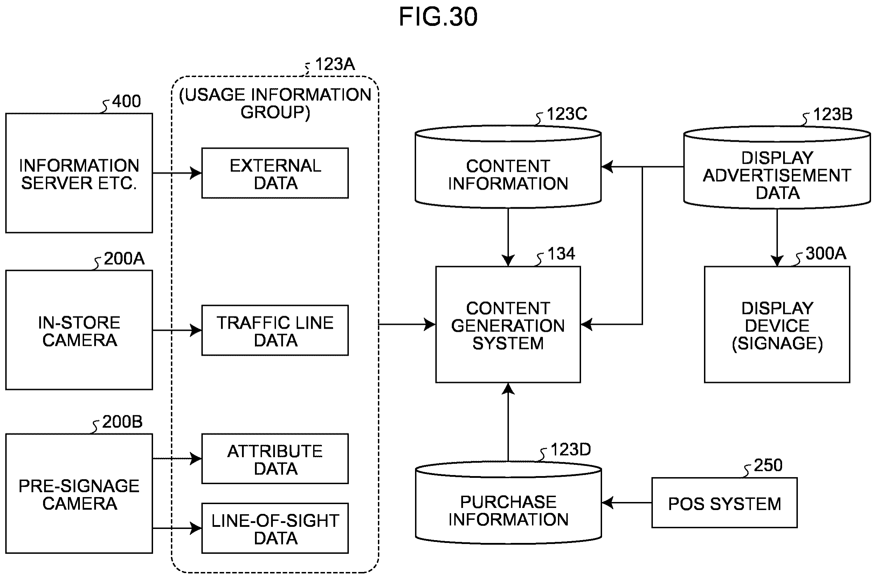

Processing of the content generation system 134 described above will be described with reference to FIG. 30 and subsequent drawings. FIG. 30 is a diagram illustrating an outline of learning processing executed by the content generation system 134.

As illustrated in FIG. 30, the content generation system 134 uses information group 123A including various pieces of information in learning. The content generation system 134 acquires external data from an information server 400 that holds information such as weather and temperature, for example. In addition, the content generation system 134 acquires traffic line data of the customer from an in-store camera 200A installed in the store. Further, the content generation system 134 acquires the attribute and the line-of-sight data of the customer from a pre-signage camera 200B installed near the signage that displays the advertisement content or the like.

In addition, the content generation system 134 controls display advertisement data 123B, which is a predetermined advertisement data image or the like to be displayed on a signage, to be displayed on a display device 300A installed in the store. At this time, the content generation system 134 acquires various kinds of data (metadata) included in the content, such as what kind of product the displayed advertisement content is an advertisement, how much the presented price is, and what kind of image is used at which position in the advertisement.

In addition, the content generation system 134 acquires, from a POS system 250, purchase information 123D including, for example, information indicating that a customer in a store has purchased a product when leaving the store.

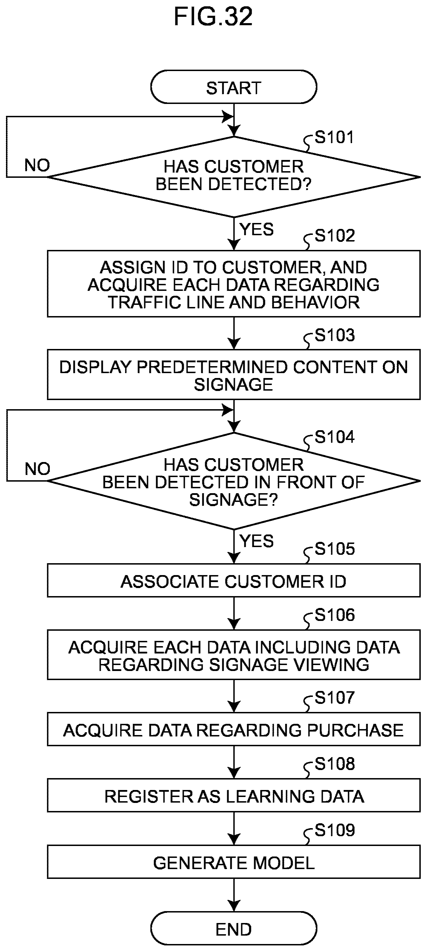

The content generation system 134 generates a model for generating the optimized content on the basis of the acquired information. Note that details of the model learning will be described below with reference to FIG. 32.

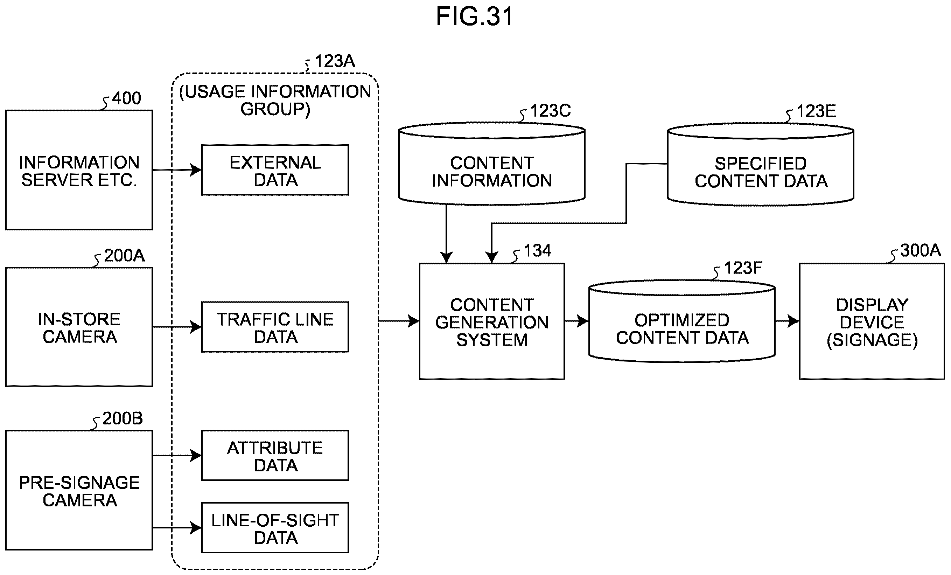

Next, processing when the content generation system 134 generates the optimized content using the model will be illustrated using FIG. 31. FIG. 31 is a diagram illustrating an outline of generation processing executed by the content generation system 134.

As in FIG. 30, the content generation system 134 acquires various types of information included in the information group 123A. In addition, the content generation system 134 acquires specified content data 123E serving as a source of the optimized content and content information 123C including information such as a product price.

Then, the content generation system 134 inputs the acquired information to the model, and generates optimized content 123F optimized for the user who is the viewing target. The content generation system 134 transmits the data of the optimized content 123F to the display device 300A, and controls the display device 300A to display the optimized content 123F.

As described above, when displaying the content, the content generation system 134 can generate and display the content, which is assumed to have a higher appeal effect to the user, in real time by using the information group related to the user.

For example, the content generation system 134 can generate content reflecting what kind of advertisement the user having a certain attribute has paid attention to and has made a purchase by using a model in which learning has been performed based on the attribute of the customer (gender, age, and the like). As a result, the content generation system 134 can generate content having a tendency that the purchasing effect in the customer having the same attribute is high, or can generate content in which information corresponding to the attribute is emphasized, and can cause the user having the same attribute to view the content.

In addition, the content generation system 134 acquires which part of the content gazed by the customer on the basis of the line-of-sight information of the customer, and can analyze what kind of information is emphasized to be highly effective by using a model in which the relevance with the subsequent purchase result is learned.

Furthermore, the content generation system 134 acquires information on what kind of product area the customer visits from the traffic line information (movement in the store) of the customer, thereby being able to know what kind of tendency the customer likes and generate content that asserts the portion. As a result, when the user visits the store, the content generation system 134 can present, to the user, content in which information matching the user's preference is emphasized.

Furthermore, the content generation system 134 can generate content in which information that the customer wants to purchase according to the situation at that time or information suitable for a product that the store side wants to promote is emphasized by acquiring the external information (weather, temperature, time zone, area, at the like) together with the information of the customer.

The content generation system 134 may use all of these information groups at the time of content generation, or may perform predetermined weighting according to an intention of an advertisement publisher or the like. Furthermore, the content generation system 134 may generate content using only a part of information.

Next, a procedure of learning processing by the content generation system 134 will be described with reference to FIG. 32. FIG. 32 is a flowchart illustrating a learning processing procedure by the content generation system 134.

First, the content generation system 134 determines whether a customer has been detected in the store (Step S101). In a case where no customer is detected (Step S101; No), the content generation system 134 waits until the detection.

On the other hand, in a case where a customer is detected (Step S101; Yes), the content generation system 134 assigns an ID to the customer, and acquires each piece of data regarding a traffic line and behavior corresponding to the customer (Step S102).

Thereafter, the content generation system 134 displays the predetermined content on the signage (Step S103). Note that the predetermined content is content indicating original advertisement content that has not been subjected to optimization processing or the like by the content generation system 134.

Subsequently, the content generation system 134 determines whether the customer has been detected before signage (Step S104). In a case where no customer is detected (Step S104; No), the content generation system 134 waits until the detection.

On the other hand, in a case where a customer is detected (Step S104; Yes), the content generation system 134 associates the customer ID in order to associate each piece of data such as the behavior of the customer in front of the signage so far with the behavior of the customer thereafter (Step S105).

Then, the content generation system 134 acquires each piece of data including the data regarding the signage viewing in association with the ID of the customer (Step S106). For example, the content generation system 134 acquires line-of-sight information such as what kind of information (price information, product image, or the like) among the content displayed on the signage has been mainly viewed by the customer.

Furthermore, the content generation system 134 acquires data regarding purchase by the customer, such as POS data (Step S107). Then, the content generation system 134 sets data regarding behavior of the customer and data regarding purchase that can be a label, and registers the set as learning data (Step S108). When the learning data is sufficiently accumulated, the content generation system 134 generates a model for content generation on the basis of the learning data (Step S109) .

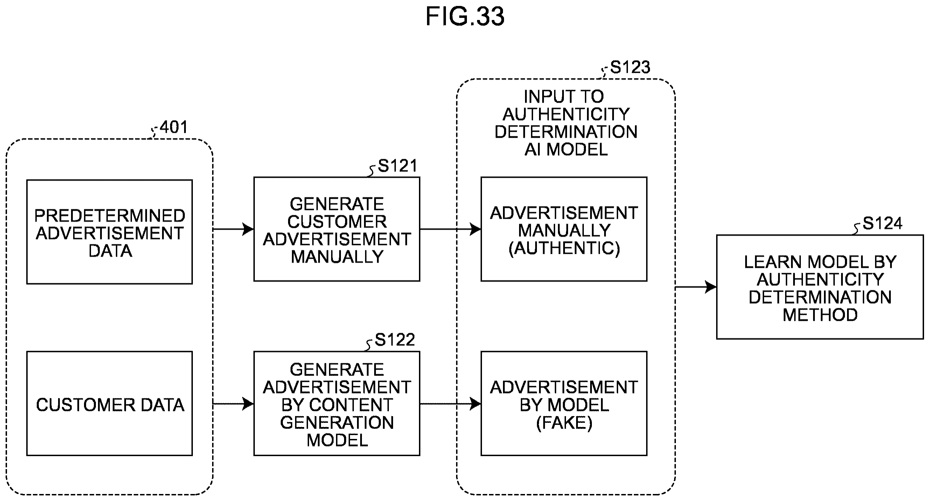

An example of a method in which the content generation system 134 generates a model will be described with reference to FIG. 33. FIG. 33 is a diagram illustrating an example of model generation processing by the content generation system 134.

For example, the content generation system 134 can employ a learning method called a generative adversarial network (GAN) or the like. In the case of performing such learning, learning data 401 in which predetermined advertisement data and customer data (including various information groups such as traffic lines, lines of sight, and purchase results) are set is passed to an advertisement generation model (Generator) and a person (advertisement designer or the like) who generates an authentic article for comparing advertisements generated by the advertisement generation model.

The advertisement designer manually generates an advertisement assumed to have the highest appeal effect on the customer (Step S121). On the other hand, the advertisement generation model generates an advertisement on the basis of the learning data 401 (Step S122). Specifically, in the advertisement generation model, the Generator (advertisement generation model) performs learning to generate an advertisement (treated as authentic) created by an advertisement designer by using original advertisement data, attribute of a customer, a gaze area, traffic line data, and the like as inputs.

The generated two advertisements are input into an authenticity determination AI model (Discriminator) (Step S123). The authenticity determination AI model performs learning such that an advertisement created by an advertisement designer can be determined as "authentic", and an advertisement generated by an advertisement generation model can be determined as "fake" (Step S124). Then, the advertisement generation model and the authenticity determination AI model share a loss value with each other (that is, let them compete) and perform learning, so that the advertisement generation model can generate an advertisement close to "authentic" as much as possible.

The content generation system 134 can generate a content generation model for generating content assumed to be most effective for the user by such a method. Note that the method of model generation illustrated in FIG. 33 is an example, and the content generation system 134 may generate the content generation model by any known method.

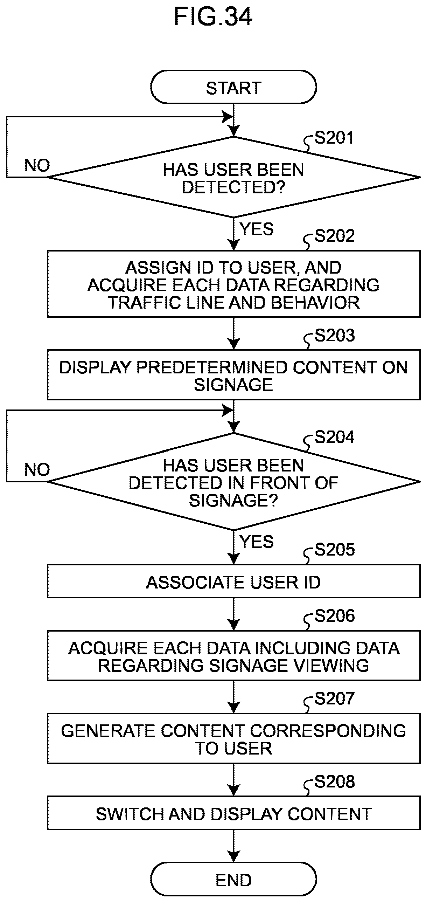

Next, a procedure of processing in which the content generation system 134 generates the optimized content for the user by using the model will be described. FIG. 34 is a flowchart illustrating a content generation processing procedure by the content generation system 134.

First, the content generation system 134 determines whether a user has been detected in the store (Step S201). In a case where the user is not detected (Step S201; No), the content generation system 134 waits until the detection.

On the other hand, in a case where the user is detected (Step S201; Yes), the content generation system 134 assigns an ID to the user, and acquires each piece of data regarding a traffic line and a behavior corresponding to the user (Step S202).

Thereafter, the content generation system 134 displays the predetermined content on the signage (Step S203). Subsequently, the content generation system 134 determines whether the user has been detected before signage (Step S204). In a case where no customer is detected (Step S204; No), the content generation system 134 waits until the detection.

On the other hand, in a case where the user is detected (Step S204; Yes), the content generation system 134 associates the user ID with each piece of data such as the behavior of the user in front of the signage so far in order to associate the user with the user (Step S205).

Then, the content generation system 134 acquires each piece of data including the data regarding the signage viewing in association with the ID of the user (Step S206). For example, the content generation system 134 acquires line-of-sight information such as what kind of information (price information, product image, or the like) among the content displayed on the signage is mainly viewed by the user.

The content generation system 134 inputs the acquired information to the content generation model, and generates content (optimized content) corresponding to the user (Step S207). Then, the content generation system 134 switches from the displayed predetermined content to the optimized content, and displays the optimized content on the display device 300 such as a signage (Step S208).

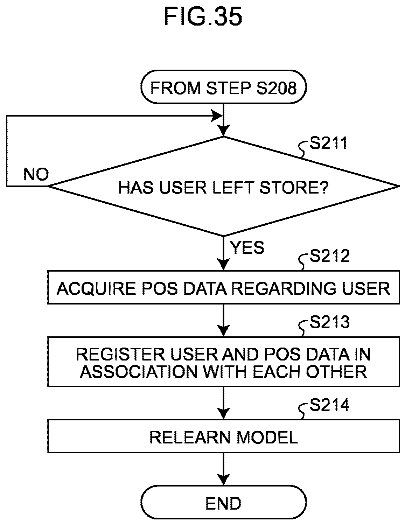

Note that the content generation system 134 may further learn the content generation model by using the information of the user who has viewed the optimized content. This point will be described with reference to FIG. 35. FIG. 35 is a flowchart illustrating a relearning processing procedure by the content generation system 134.

The content generation system 134 determines whether the user who has viewed the optimized content has left the store (Step S211). In a case where the user has not left the store (Step S211; No), the content generation system 134 waits until the user leaves the store.

On the other hand, in a case where the user has left the store (Step S211; Yes), the content generation system 134 acquires POS data indicating a result of purchase by the user and the like (Step S212). The content generation system 134 registers the information regarding the user and the POS data in association with each other as learning data (Step S213).

Thereafter, the content generation system 134 relearns the content generation model by using the registered learning data (Step S214).

As described above, in a case where the purchase history of the user after viewing the optimized content is acquired, the content generation system 134 may relearn the model on the basis of the behavior information of the user who has viewed the optimized content and the purchase history of the user.

For example, even if the content generation system 134 generates the optimized content, there is a case where the optimized content does not lead to purchase or the degree of satisfaction of the user is lowered. Therefore, the content generation system 134 can generate a model that generates content having a higher advertising effect by further relearning the model using the purchase behavior of the user after viewing the optimized content or the like. For example, in a case where a user who has viewed the optimized content in which the price information is emphasized purchases a product more or a purchase unit price is higher, the content generation system 134 can generate a model that performs such emphasis with a higher probability by relearning.

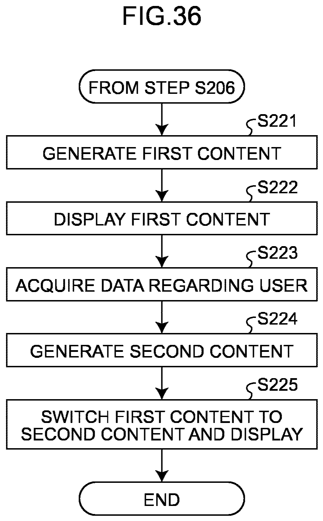

Furthermore, after displaying the optimized content once, the content generation system 134 may perform control to change the content by further using the information of the user. For example, the content generation system 134 may generate optimized content (hereinafter, referred to as "first content" for distinction) by using the user's information before coming in front of the signage, and may generate changed content (hereinafter, referred to as "second content" for distinction) by using the subsequent user's information. This point will be described with reference to FIG. 36. FIG. 36 is a flowchart illustrating a second content generation processing procedure by the content generation system 134.

After Step S206 illustrated in FIG. 34, the content generation system 134 generates the first content (Step S221). The content generation system 134 displays the first content on the display device 300 (Step S222).

Thereafter, the content generation system 134 acquires information regarding the user who has viewed the first content (Step S223). For example, the content generation system 134 acquires information indicating which region of the first content the user is gazing at.

The content generation system 134 generates the second content on the basis of the acquired data (Step S224). For example, the content generation system 134 generates the second content in which a region of the first content that the user is gazing at is emphasized.

Then, the content generation system 134 switches the first content to the second content and displays the second content on the display device 300 (Step S225).

As described above, after generating the first content, in a case where the behavior information of the user who has viewed the first content is further acquired, the content generation system 134 may generate the second content on the basis of the acquired behavior information. For example, the content generation system 134 generates the second content so as to emphasize information (that is, information on a portion gazed by the user in the first content) of a position corresponding to the line-of-sight information on the basis of the line-of-sight information of the user. As a result, the content generation system 134 can provide more real-time content to the user.

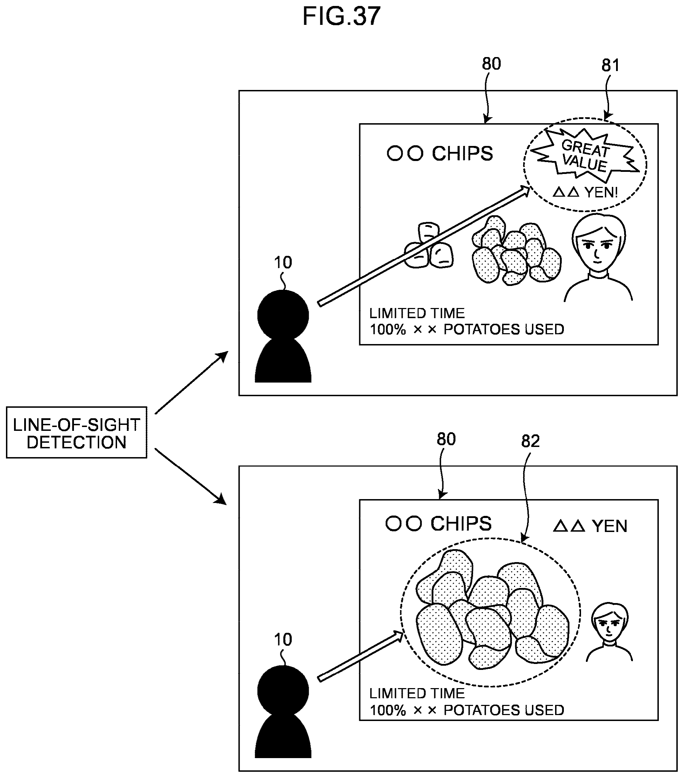

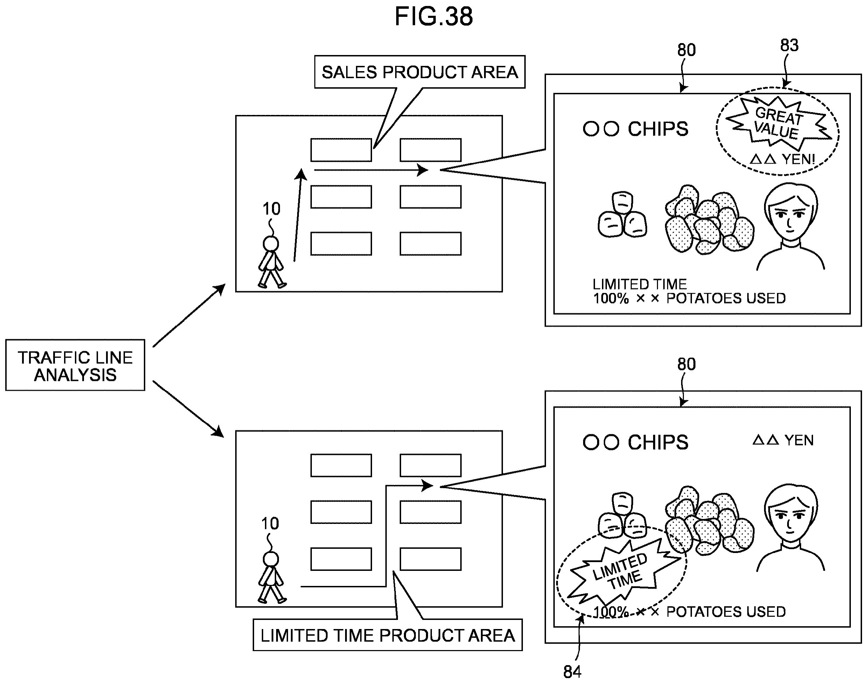

The optimized content generated as the first content or the second content will be exemplified using FIGS. 37 and 38. FIG. 37 is a diagram illustrating an example of content optimized on the basis of the line of sight of the user 10.

Content 80 is advertisement content for advertising a certain product. The content 80 includes a plurality of pieces of information such as a product name, a product price, a product image, and discount information.

The content generation system 134 detects the line-of-sight information of the user 10 who views the content 80. At this time, it is assumed that the user 10 gazes at discount information 81 indicating that the price is low in the content 80. In this case, the content generation system 134 changes the content 80 so that the discount information 81 is emphasized more than before. For example, the content generation system 134 displays the discount information 81 larger than before or in a conspicuous color.

Alternatively, it is assumed that user 10 gazes at product image 82 in the content 80. In this case, the content generation system 134 changes the content 80 so as to emphasize the product image 82 more than before. For example, the content generation system 134 displays the product image 82 larger than before, displays the product image in a conspicuous color, or changes the layout of the entire content 80 so that the image of the product or the product package becomes conspicuous.

Note that the line-of-sight information illustrated in FIG. 37 may include not only the gaze region but also the gaze time. For example, in a case where the user 10 gazes at a plurality of areas of the content 80, the longest gazed area may be most emphasized.

Another example of the optimized content generated by the content generation system 134 will be described. FIG. 38 is a diagram illustrating an example of content optimized on the basis of a traffic line of the user 10.

Before the user 10 views the content 80, the content generation system 134 acquires traffic line information indicating which area in the store the user 10 has passed through. For example, it is assumed that the user 10 passes through a sale product area in which a lot of inexpensive products are arranged in a store more or stays for a long time. In this case, the content generation system 134 changes the content 80 so that discount information 83 is emphasized more than before.

Alternatively, it is assumed that the user 10 passes through an area in which many limited-time products are arranged in the store more or stays for a long time. In this case, the content generation system 134 changes the content 80 so that limited-time information 84 is emphasized more than before.

As described above, the content generation system 134 can further enhance the advertising effect of the content by generating the content in real time in accordance with the behavior of the user in the store.

### (2. Other Embodiments)

The processing according to each embodiment described above may be performed in various different modes other than each embodiment described above.

Among the processing described in the above embodiments, all or part of the processing described as being performed automatically can be performed manually, or all or part of the processing described as being performed manually can be performed automatically by a known method. In addition, the processing procedure, specific name, and information including various data and parameters illustrated in the document and the drawings can be arbitrarily changed unless otherwise specified. For example, the various types of information illustrated in each drawing are not limited to the illustrated information.

In addition, each component of each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. For example, the processing executed by each functional unit (control unit 130) of the information processing device 100 of the present disclosure may be executed by an edge terminal such as the sensor device 200. Furthermore, the information processing device 100 may be an edge terminal itself having a photographing function such as a camera.

In addition, the above-described embodiments and modifications can be appropriately combined within a range that does not contradict processing contents.

Furthermore, the effects described in the present specification are merely examples and are not limited, and other effects may be provided.

### (3. Effects of Information Processing Device according to Present Disclosure)

As described above, the information processing device (the information processing device 100 in the embodiment) according to the present disclosure includes the acquisition unit (the acquisition unit 131 in the embodiment) and the estimation unit (the state estimation system 132 in the embodiment). The acquisition unit acquires traffic line information indicating a traffic line of a customer in a predetermined space. The estimation unit estimates the future behavior or mental state of the user located in the space from the traffic line information of the user to be estimated by using the first model (the state estimation model 50 in the embodiment) in which the relevance between the traffic line information and the behavior result in the space of the customer is learned. For example, the acquisition unit acquires traffic line information from an image acquired by an imaging device installed in a predetermined space.

As described above, the information processing device according to the present disclosure can estimate what kind of behavior the user intends to perform in the future or what kind of mental state the user is in by analyzing the traffic line of the user by using the model in which the relevance between the traffic line and the behavior result is learned. That is, the information processing device can accurately estimate the behavior and the mental state of the user by analyzing the traffic line in which the purchasing activity and the mental state of the user are likely to appear.

Further, the predetermined space is a store, and the estimation unit estimates the purchase behavior of the user in the store from the traffic line information of the user by using the first model in which the relevance between the traffic line information and the purchase history of the customer in the store is learned. For example, the estimation unit estimates whether the user performs a payment behavior for a product or a service in the store as the purchase behavior of the user. Furthermore, the estimation unit may estimate an amount of money paid by the user as a consideration for a product or a service in the store as the purchase behavior of the user.

As described above, the information processing device can accurately estimate the purchase behavior of the user's identity by analyzing the traffic line of the user by using the model in which the relevance between the traffic line and the purchase behavior is learned.

The estimation unit estimates the mental state of the user located in the store from the traffic line information of the user by using the first model in which the relevance between the traffic line information and the evaluation from the customer after the customer stays in the store is learned. For example, the estimation unit estimates whether the user located in the store is satisfied with the service provided by the store from the traffic line information of the user.

As described above, the information processing device can accurately estimate the mental state of the user by using the model in which the relevance between the traffic line and the evaluation of the store based on the feedback from the customer is learned.

Furthermore, the estimation unit determines whether to estimate the purchase behavior of the user or the mental state of the user according to the congestion status of the store.

As described above, the information processing device can accurately estimate information useful for the operation of the store by varying the analysis target in real time according to the situation of the store.

The acquisition unit acquires the attribute of the customer corresponding to the traffic line information together with the traffic line information. The estimation unit estimates the future behavior or mental state of the user located in the space from the traffic line information of the user to be estimated by using the first model in which the relevance between traffic line information and the attribute, and the behavior result in the space of the customer is learned.

In this manner, the information processing device can further improve the accuracy of estimation by performing the estimation processing including the attribute.

The acquisition unit acquires behavior information of the customer in the store and a purchase result of the customer in the store. The estimation unit (the purchase probability estimation system 133 in the embodiment) estimates the purchase probability of the user in the store from the behavior information of the user by using a second model (the purchase estimation model 60 in the embodiment) in which the relevance between the behavior information and the purchase result of the customer is learned.

As described above, the information processing device can accurately estimate whether the user will make a purchase by analyzing the user's behavior or the like using not only the traffic line but also the model in which the relevance between the customer's casual behavior or gesture and the purchase result is learned.

In addition, the acquisition unit acquires the behavior information of the customer after the customer pays attention to the product or service provided by the store and the purchase result of the customer in the store. The estimation unit estimates the purchase probability of the user in the store from the product or service that the user has paid attention to and the behavior information of the user by using the second model in which the relevance between the behavior information of the customer after the customer has paid attention to the product or service and the purchase result of the customer in the store is learned.

As described above, the information processing device learns a series of behaviors including the first behavior of paying attention to a product and the second behavior such as the subsequent behavior or gesture, and thus, can accurately estimate the probability of whether the user will purchase from the user's behavior that is seemingly unrelated to purchase.

In addition, the acquisition unit acquires behavior information and attributes of the customer in the store and a purchase result of the customer in the store. The estimation unit estimates the purchase probability of the user in the store from the behavior information and the attribute of the user by using the second model in which the relevance between the behavior information and the attribute and the purchase result of the customer is learned. In this case, the acquisition unit may acquire the customer and the purchase result of the customer in association with each other by at least one of face recognition processing based on an image obtained by imaging the customer, specification of store fixtures used by the customer, and matching processing of clothes of the customer based on the image.

In this manner, the information processing device can further improve the accuracy of estimation by performing the estimation processing including the attribute.

Furthermore, the information processing device according to the present disclosure may have a configuration including an acquisition unit (the acquisition unit 131 in the embodiment) and a generation unit (the content generation system 134 in the embodiment). The acquisition unit acquires behavior information of a customer in a predetermined space. The generation unit generates optimized content, which is content newly generated for the user, from the behavior information of the user to be estimated by using a model (the content generation model 70 in the embodiment) in which the relevance between the behavior information and the advertising effect of the content presented in the space is learned.

As described above, the information processing device according to the present disclosure can present more effective digital signage or the like to the user by generating content optimized according to the information regarding the user or the like. That is, the information processing device can generate content having a higher advertising effect for each individual user.

The acquisition unit acquires, as the behavior information, at least one of traffic line information indicating a traffic line of the customer in the space, line-of-sight information indicating a line-of-sight history of the customer with respect to the content, attribute information of the customer, and external environment information when the customer views the content. For example, when acquiring traffic line information, the acquisition unit acquires traffic line information by analyzing an image acquired by an imaging device installed in a space. When acquiring the line-of-sight information, the acquisition unit acquires the line-of-sight information by analyzing the line of sight of the customer by a sensor included in the display device that displays the content.

As described above, the information processing device can accurately perform optimization for each user by acquiring various types of information regarding the user.

In addition, the predetermined space is a store, and the generation unit generates the optimized content using a model learned using a purchase history of a customer in the store as an advertising effect. For example, the acquisition unit acquires line-of-sight information of a customer when the content is viewed. The generation unit generates the optimized content by using the model learned by using the feature indicated at the position corresponding to the line-of-sight information in the content and the purchase history of the customer. Furthermore, the acquisition unit acquires line-of-sight information when the user views the content. The generation unit generates the optimized content so as to emphasize the feature indicated at the position gazed by the user in the content on the basis of the line-of-sight information of the user.

In this manner, the information processing device can further enhance the advertising effect for the user by generating content in which a price, an image, or the like at which the user directs his/her line of sight is emphasized.

The acquisition unit acquires traffic line information in the store of the customer before the content is viewed. The generation unit generates the optimized content using the model in which the relevance between the traffic line information and the purchase history of the customer in the store is learned. For example, the acquisition unit acquires installation information of a product or a service in a store associated with traffic line information of the user. The generation unit generates the optimized content so as to emphasize the display indicating the feature related to the installation information in the content on the basis of the installation information.

As described above, since the information processing device optimizes the content on the basis of the traffic line of the user in the store, it is possible to generate the content according to the interest and behavior of the user.

The acquisition unit acquires attribute information of the customer. The generation unit generates the optimized content by using a model in which the relevance between the attribute information and the purchase history of the customer in the store is learned. Furthermore, the acquisition unit may acquire external environment information including at least one of weather, temperature, time, and region when the customer views the content. The generation unit generates the optimized content by using a model in which the relevance between the external environment information and the purchase history of the customer in the store is learned.

As described above, the information processing device can generate the content more in accordance with the interest of the user or the content in accordance with the situation by optimizing the content using the attribute of the user, the external environment information of the user, or the like.

Furthermore, after generating the optimized content, in a case where the behavior information of the user who has viewed the optimized content is further acquired, the generation unit may generate the second optimized content on the basis of the acquired behavior information. Furthermore, after generating the optimized content, in a case where the line-of-sight information of the user who has viewed the optimized content is further acquired, the generation unit generates the second optimized content so as to emphasize information of a place in the optimized content corresponding to the line-of-sight information on the basis of the acquired line-of-sight information.

In this manner, the information processing device may perform stepwise generation processing such as further changing the optimized content. As a result, the information processing device can provide real-time content such as an advertisement to the user.

Furthermore, in a case where the purchase history of the user after viewing the optimized content is acquired, the generation unit relearns the model on the basis of the behavior information of the user who has viewed the optimized content and the purchase history of the user.

As described above, the information processing device can improve the accuracy of generating the content more suitable for the user by further learning the model in response to the feedback on the optimized content.

In addition, the generation unit generates the optimized content by using a model learned by using a result such as whether a customer who has viewed the content has done a payment behavior for a product or a service in a store as the purchase history. In addition, the generation unit may generate the optimized content by using a model learned by using an amount of money paid as a consideration for a product or a service in a store by a customer who views the content, as the purchase history.

As described above, the information processing device learns the model using the purchase result as a label, so that it is possible to generate content that exhibits an advertising effect more actively leading to purchase activities.

### (4. Hardware Configuration)

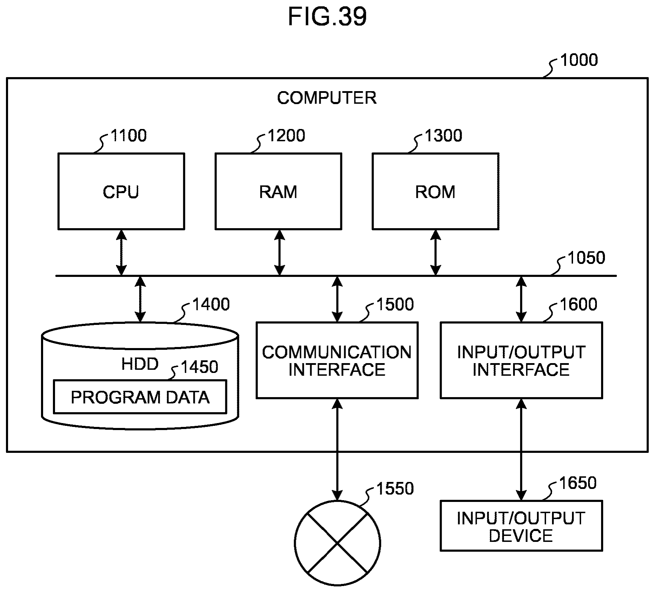

The information device such as the information processing device 100 according to each embodiment described above is achieved by a computer 1000 having a configuration as illustrated in FIG. 39, for example. Hereinafter, the information processing device 100 according to the present disclosure will be described as an example. FIG. 39 is a hardware configuration diagram illustrating an example of the computer 1000 that implements the functions of the information processing device 100. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records the information processing program according to the present disclosure which is an example of program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (media). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing device 100 according to the embodiment, the CPU 1100 of the computer 1000 implements the functions of the control unit 130 and the like by executing the information processing program loaded on the RAM 1200. In addition, the HDD 1400 stores an information processing program according to the present disclosure and data in the storage unit 120. Note that the CPU 1100 reads the program data 1450 from the HDD 1400 and executes the program data, but as another example, these programs may be acquired from another device via the external network 1550.

Note that the present technology can also adopt the following configurations.
(1) An information processing device comprising:
   an acquisition unit that acquires behavior information of a customer in a predetermined space; and
   a generation unit that generates optimized content, which is content newly generated for a user to be estimated, from behavior information of the user by using a model that has learned a relevance between the behavior information and an advertising effect of content presented in the space.
(2) The information processing device according to (1), wherein
   the acquisition unit
   acquires, as the behavior information, at least one of traffic line information indicating a traffic line of a customer in the space, line-of-sight information indicating a line-of-sight history of the customer with respect to content, attribute information of the customer, and external environment information when the customer views the content.
(3) The information processing device according to (2), wherein
   the acquisition unit
   acquires, in a case where the traffic line information is acquired, the traffic line information by analyzing an image acquired by an imaging device installed in the space.
(4) The information processing device according to (2) or (3), wherein
   the acquisition unit
   acquires, in a case where the line-of-sight information is acquired, the line-of-sight information by analyzing a line of sight of the customer by a sensor included in a display device that displays the content.
(5) The information processing device according to any one of (1) to (4), wherein
   the predetermined space is a store, and
   the generation unit
   generates the optimized content using the model learned using a purchase history of the customer in the store as the advertising effect.
(6) The information processing device according to (5), wherein
   the acquisition unit
   acquires line-of-sight information of the customer when viewing the content, and
   the generation unit
   generates the optimized content by using the model learned by using a feature indicated at a position corresponding to the line-of-sight information in the content and the purchase history of the customer.
(7) The information processing device according to (6), wherein
   the acquisition unit
   acquires line-of-sight information when the user views content, and
   the generation unit
   generates the optimized content so as to emphasize a feature indicated at a position gazed by the user in the content based on the line-of-sight information of the user.
(8) The information processing device according to any one of (5) to (7) wherein
   the acquisition unit
   acquires traffic line information in a store of the customer before viewing the content, and
   the generation unit
   generates the optimized content by using the model in which a relevance between the traffic line information and the purchase history of the customer in the store is learned.
(9) The information processing device according to (8), wherein
   the acquisition unit
   acquires installation information of a product or a service in the store associated with traffic line information of the user, and
   the generation unit
   generates the optimized content so as to highlight display indicating a feature related to the installation information in the content based on the installation information.
(10) The information processing device according to any one of (5) to (9), wherein
   the acquisition unit
   acquires attribute information of the customer, and
   the generation unit
   generates the optimized content using the model in which a relevance between the attribute information and the purchase history of the customer in the store is learned.
(11) The information processing device according to any one of (5) to (10), wherein
   the acquisition unit
   acquires external environmental information including at least any one of weather, temperature, time, and region when the customer views the content, and
   the generation unit
   generates the optimized content using the model in which a relevance between the external environment information and the purchase history of the customer in the store is learned.
(12) The information processing device according to any one of (5) to (11), wherein
   the generation unit
   generates, in a case where behavior information of the user who has viewed the optimized content is further acquired after the optimized content is generated, second optimized content based on the acquired behavior information.
(13) The information processing device according to (12), wherein
   the generation unit
   generates, in a case where line-of-sight information of the user who has viewed the optimized content is further acquired after generating the optimized content, the second optimized content so as to emphasize information of a place in the optimized content corresponding to the line-of-sight information based on the acquired line-of-sight information.
(14) The information processing device according to any one of (5) to (13), wherein
   the generation unit
   relearns, in a case where a purchase history of a user after viewing the optimized content is acquired, the model based on behavior information of the user who has viewed the optimized content and the purchase history of the user.
(15) The information processing device according to any one of (5) to (14), wherein
   the generation unit
   generates, as the purchase history, the optimized content by using the model learned by using a result such as whether a customer who has viewed the content has done a payment behavior for a product or a service in the store.
(16) The information processing device according to any one of (5) to (15), wherein
   the generation unit
   generates, as the purchase history, the optimized content by using the model learned using an amount of money paid as a consideration for a product or a service in the store by a customer who has viewed the content.
(17) An information processing method causing a computer to execute:
   acquiring behavior information of a customer in a predetermined space; and
   generating optimized content, which is content newly generated for a user to be estimated, from behavior information of the user by using a model that has learned a relevance between the behavior information and an advertising effect of content presented in the space.
(18) An information processing program causing a computer to function as an information processing device including:
   an acquisition unit that acquires behavior information of a customer in a predetermined space; and
   a generation unit that generates optimized content, which is content newly generated for a user to be estimated, from behavior information of the user by using a model that has learned a relevance between the behavior information and an advertising effect of content presented in the space.

### Reference Signs List

- 1: INFORMATION PROCESSING SYSTEM

- 100: INFORMATION PROCESSING DEVICE
- 110: COMMUNICATION UNIT
- 120: STORAGE UNIT
- 121: STATE ESTIMATION INFORMATION STORAGE UNIT
- 122: PURCHASE ESTIMATION INFORMATION STORAGE UNIT
- 123: CONTENT GENERATION INFORMATION STORAGE UNIT
- 130: CONTROL UNIT
- 131: ACQUISITION UNIT
- 132: STATE ESTIMATION SYSTEM
- 133: PURCHASE PROBABILITY ESTIMATION SYSTEM
- 134: CONTENT GENERATION SYSTEM
- 200: SENSOR DEVICE
- 300: DISPLAY DEVICE

## Claims

1. An information processing device comprising:
an acquisition unit that acquires behavior information of a customer in a predetermined space; and
a generation unit that generates optimized content, which is content newly generated for a user to be estimated, from behavior information of the user by using a model that has learned a relevance between the behavior information and an advertising effect of content presented in the space.

2. The information processing device according to claim 1, wherein
the acquisition unit
acquires, as the behavior information, at least one of traffic line information indicating a traffic line of a customer in the space, line-of-sight information indicating a line-of-sight history of the customer with respect to content, attribute information of the customer, and external environment information when the customer views the content.

3. The information processing device according to claim 2, wherein
the acquisition unit
acquires, in a case where the traffic line information is acquired, the traffic line information by analyzing an image acquired by an imaging device installed in the space.

4. The information processing device according to claim 2, wherein
the acquisition unit
acquires, in a case where the line-of-sight information is acquired, the line-of-sight information by analyzing a line of sight of the customer by a sensor included in a display device that displays the content.

5. The information processing device according to claim 1, wherein
the predetermined space is a store, and
the generation unit
generates the optimized content using the model learned using a purchase history of the customer in the store as the advertising effect.

6. The information processing device according to claim 5, wherein
the acquisition unit
acquires line-of-sight information of the customer when viewing the content, and
the generation unit
generates the optimized content by using the model learned by using a feature indicated at a position corresponding to the line-of-sight information in the content and the purchase history of the customer.

7. The information processing device according to claim 6, wherein
the acquisition unit
acquires line-of-sight information when the user views content, and
the generation unit
generates the optimized content so as to emphasize a feature indicated at a position gazed by the user in the content based on the line-of-sight information of the user.

8. The information processing device according to claim 5, wherein
the acquisition unit
acquires traffic line information in a store of the customer before viewing the content, and
the generation unit
generates the optimized content by using the model in which a relevance between the traffic line information and the purchase history of the customer in the store is learned.

9. The information processing device according to claim 8, wherein
the acquisition unit
acquires installation information of a product or a service in the store associated with traffic line information of the user, and
the generation unit
generates the optimized content so as to highlight display indicating a feature related to the installation information in the content based on the installation information.

10. The information processing device according to claim 5, wherein
the acquisition unit
acquires attribute information of the customer, and
the generation unit
generates the optimized content using the model in which a relevance between the attribute information and the purchase history of the customer in the store is learned.

11. The information processing device according to claim 5, wherein
the acquisition unit
acquires external environmental information including at least any one of weather, temperature, time, and region when the customer views the content, and
the generation unit
generates the optimized content using the model in which a relevance between the external environment information and the purchase history of the customer in the store is learned.

12. The information processing device according to claim 5, wherein
the generation unit
generates, in a case where behavior information of the user who has viewed the optimized content is further acquired after the optimized content is generated, second optimized content based on the acquired behavior information.

13. The information processing device according to claim 12, wherein
the generation unit
generates, in a case where line-of-sight information of the user who has viewed the optimized content is further acquired after generating the optimized content, the second optimized content so as to emphasize information of a place in the optimized content corresponding to the line-of-sight information based on the acquired line-of-sight information.

14. The information processing device according to claim 5, wherein
the generation unit
relearns, in a case where a purchase history of a user after viewing the optimized content is acquired, the model based on behavior information of the user who has viewed the optimized content and the purchase history of the user.

15. The information processing device according to claim 5, wherein
the generation unit
generates, as the purchase history, the optimized content by using the model learned by using a result such as whether a customer who has viewed the content has done a payment behavior for a product or a service in the store.

16. The information processing device according to claim 5, wherein
the generation unit
generates, as the purchase history, the optimized content by using the model learned using an amount of money paid as a consideration for a product or a service in the store by a customer who has viewed the content.

17. An information processing method causing a computer to execute:
acquiring behavior information of a customer in a predetermined space; and
generating optimized content, which is content newly generated for a user to be estimated, from behavior information of the user by using a model that has learned a relevance between the behavior information and an advertising effect of content presented in the space.

18. An information processing program causing a computer to function as an information processing device including:
an acquisition unit that acquires behavior information of a customer in a predetermined space; and
a generation unit that generates optimized content, which is content newly generated for a user to be estimated, from behavior information of the user by using a model that has learned a relevance between the behavior information and an advertising effect of content presented in the space.
